# EUROPÄISCHE PATENTANMELDUNG

(11) **EP 1 167 157 A1**
(43) Veröffentlichungstag der Anmeldung: **02.01.2002**
(21) Anmeldenummer: 01114311.2
(22) Anmeldetag: 13.06.2001
(51) Int. Cl.: B62B 9/20

(54) **Zusammenklappbarer Kinderwagen mit verschwenkbaren Schwenkschiebern**

(30) Priorität: 21.06.2000 AT 10802000
(71) Anmelder: KNOKIN Baby GmbH, 4906 Eberschwang (AT)
(72) Erfinder: Fiedler, Norbert, 4552 Wartberg an der Krems (AT); Morgenbesser, Reinhard, 4941 Mehrnbach (AT); Buth, Erich, 4600 Wels (AT); Köbrunner, Reinhold, Dr., 4840 Vöcklabruck (AT); Duringer, Annemarie, 4922 St. Marienkirchen (AT)
(74) Vertreter: Secklehner, Günter, Dr.

(57) **Zusammenfassung**

Die Erfindung betrifft eine Höhenverstelleinrichtung (32) zum stufenweisen Verstellen eines Lenkrahmens (6) eines Transportmittels, insbesondere Kinderwagen, um eine parallel zu einer Fahrachse des Transportmittels verlaufenden Schwenkachse gegenüber einem rahmenförmigen Schwenkschieber (5), die durch zumindest eine zwischen dem Lenkrahmen (6) und dem Schwenkschieber (5) angeordnete Rastvorrichtung (38) gebildet ist, welche zumindest ein mit dem Schwenkschieber (5) bzw. Lenkschieber oder Lenkrahmen (6) verbundenes Rastelement (44) und zumindest eine wenigstens ein Positionier- und Arretierelement (68) aufweisende Positionier- und Arretiervorrichtung (61) aufweist. Ein gabelkopfförmiger Führungsteil (62) der Positionier- und Arretiervorrichtung (61) weist eine Führungsbohrung (58) für eine Schwenkachse (43) auf, die das etwa scheibenförmige Rastelement (44) lagert, und der gabelkopfförmige Führungsteil (62) lagert das Positionier- und Arretierelement (68) mit zumindest einem in eine Rastausnehmung (49) des Rastelementes (44) eingreifenden elastisch vorgespannten Arretierfortsatz (73) verstellbar. Ferner betrifft die Erfindung eine Gelenkanordnung und eine Verstelleinrichtung für den Rücken- und Fußteil.

## Beschreibung

Die Erfindung betrifft eine Höhenverstelleinrichtung für ein Transportmittel, insbesondere Kinderwagen, wie sie im Oberbegriff des Anspruches 1 angegeben ist, eine Gelenkanordnung gemäß dem Oberbegriff des Anspruches 24, Verstelleinrichtungen für einen Rückenteil und Fußteil eines Transportmittels, insbesondere Kinderwagen, wie diese in den Oberbegriffen der Ansprüche 27 und 28 angeführt sind und einen Kinderwagen, wie er im Oberbegriff des Anspruches 32 beschrieben ist. Weiters betrifft die Erfindung die Verwendung von Aluminiumdruckgußteilen und/oder Aluminiumstranggußteilen bzw. vergossenen Polyurethanen sowie ineinandergreifenden bzw. ineinander geführten Aluminiumprofilen bei einem Kinderwagen, wie in den Ansprüchen 34, 35 und 36 beschrieben.

Es ist bereits eine Vielzahl von Transportmitteln, insbesondere Kinderwägen, die mit mehreren auf mehreren Fahrachsen angeordneten drehbaren Rädern die Tragelemente abstützen und die über ein Querverbindungsteil zur Aufnahme eines Sitz- und/oder Liegeteiles und gegebenenfalls eines Rückenteiles bzw. eines Fußteiles ausgebildet sind und die einen Schwenkschieber lagern, der in seinem von den Tragelementen abgewendeten Ende mit einem gegenüber dem Schwenkschieber verschwenkbaren Lenkrahmen und einer Verriegelungsvorrichtung für das bedarfsweise Zusammenklappen des Kinderwagens versehen ist, bekannt. Des weiteren sind Höhenverstelleinrichtungen zum stufenweisen Verstellen bzw. Verschwenken eines gegenüber einem rahmenförmigen Schwenkschieber angeordneten Lenkrahmens eines Transportmittels, insbesondere Kinderwagen, um eine parallel zu einer Fahrachse des Transportmittels verlaufenden Schwenkachse und Gelenkanordnungen zwischen einem insbesondere durch Formrohre gebildeten Unterrahmen und einem insbesondere durch Formrohre gebildeten rahmenförmigen Schwenkschieber, bei dem im Längsverlauf der Formrohre des Unterrahmens und des Schwenkschiebers Übertragungsorgane der Gelenkanordnung aufgesetzt sind, bekannt. Nachteilig ist dabei, daß vor allem die Höhenverstelleinrichtung und die Gelenkanordnung mit aus einem eine geringe Festigkeit aufweisenden Material, insbesondere Kunststoff, gefertigt werden, wodurch nach mehrmaligen Verschwenkvorgängen des Lenkrahmens gegenüber dem Schwenkschieber und/oder Verschwenken des Schwenkschiebers gegenüber dem Grundrahmen abnützungsbedingte Verschleiße auftreten, wodurch keine spielfreie Verbindung bzw. Führung zwischen den einzelnen Bauteilen gegeben ist und somit die Einsatzdauer des Kinderwagens sehr beschränkt ist. Des weiteren sind nur Kunststoffe mit einer hohen Alterungsbeständigkeit und wasserabweisenden Eigenschaft zu verwenden, die üblicherweise kostspielig sind.

Ein weiterer Nachteil liegt vor allem auch darin, daß derartige Kinderwägen in einem schwingungserregten Betriebszustand, wie dieser auf unebenen Fahrbahnen eintreten kann, nur eine geringe Dämpfung der Schwingungen bzw. Schwingungsamplitude ermöglicht.

Aufgabe der Erfindung ist es nunmehr, eine kleinbauende und ein geringes Gewicht aufweisende Höhenverstelleinrichtung und Gelenkanordnung, welche auf beiden Seiten gleich hohe Kräfte aufnehmen kann und welche über die gesamte Einsatzdauer eines Transportmittels, insbesondere Kinderwagens, spielfrei arbeiten, und eine selbständig arretierende winkelverstellbare Verstelleinrichtung zur einfachen Verstellung und Arretierung für einen Rückenteil und Fußteil zu schaffen.

Die Aufgabe der Erfindung wird durch die im Anspruch 1 wiedergegebenen kennzeichnenden Merkmale erreicht. Der überraschende Vorteil dabei ist, daß der relativ zum Schwenkschieber stufenweise verstellbare bzw. verschwenkbare Lenkrahmen in einer zwischen der Fahrbahnoberfläche und diesem bemessenen Bedienungshöhe individuell einstellbar ist, und daß die eingestellte Bedienungshöhe über eine Rastvorrichtung fixierbar ist, wobei die robust aufgebaute, wenige Einzelteile aufweisende Rastvorrichtung mit einem Positionier- und Arretierelement ausgestattet ist, das in seiner Ausgangsstellung in Arretierrichtung elastisch vorgespannt ist und dieses gegenüber ein Rastelement spielfrei arretiert. Ein weiterer Vorteil liegt auch im gabelkopfförmigen konstruktiven Aufbau des Führungsteiles, der das Rastelement bereichsweise überdeckt, wodurch eine Beschädigung oder Zerstörung der Rastvorrichtung durch seitlich oder schräg einwirkende Kräfte, insbesondere wenn der Kinderwagen umkippt, vermeidbar ist.

Vorteilhaft ist auch eine weitere Ausführungsform nach Anspruch 2, wodurch von den Führungselementen Führungsflächen für das Rastelement ausgebildet werden, die planparallel zu Führungsflächen des Rastelementes verlaufen, wodurch ein abnützungsbedingter Verschleiß unterbunden werden kann und die Lebensdauer der Rastvorrichtung der Höhenverstelleinrichtung im wesentlichen unbegrenzt hoch ist.

Vorteilhaft ist weiters eine Ausbildung nach Anspruch 3, da durch die spielfreie Führung in radialer und axialer Richtung des Lenkrahmens zu dem Schwenkschieber die von der Bedienperson angebrachten Kräfte zum Schieben bzw. Lenken des Transportmittels, insbesondere des Kinderwagens, unmittelbar übertragbar ist, wodurch ein hoher Bedienungskomfort geschaffen wird. Des weiteren ist von Vorteil, daß eine für das Kleinkind angenehm wirkende Schaukelbewegung gleichmäßig und gezielt übertragbar sind, ohne durch ein eventuell vorhandenes Spiel in der Rastvorrichtung unerwünschte Schaukelungen und Schaukelbewegungen zu erzeugen.

Durch die Ausbildungen nach den Ansprüchen 4 und 5 ist es möglich, eine kleinbauende und platzsparende konstruktive Ausgestaltung der Rastvorrichtung für die Höhenverstelleinrichtung zu bilden.

Nach einer anderen Ausführungsvariante gemäß den Ansprüchen 6 bis 8 wird durch die mehrere Funktionen aufweisenden Führungsteile und Rastelemente einerseits eine zueinander spielfreie Führung und andererseits die Fixierung durch den Fortsatz mit dem Lenkrahmen oder Schwenkschieber erreicht. Durch die Ausbildung eines einstückigen Führungsteiles und einstückigen Rastelementes, die jeweils einen Fortsatz aufweisen, ist eine einfache kraft- und/ oder formschlüssige Verbindung derselben mit den Formrohren möglich, wodurch eine robuste verwindungssteife verdrehgesicherte Aufnahme bzw. Halterung der Rastvorrichtung gegeben ist.

Vorteilhaft sind auch die Weiterbildungen nach den Ansprüchen 9 bis 11, wodurch eine einfache, konstruktive und kostengünstige sowie platzsparende Ausgestaltung der Positionierund Arretiervorrichtung für die bedarfsweise Verstellung oder Verschwenkung des Lenkrahmens gegenüber einem Schwenkschieber ermöglicht wird.

Nach der Ausgestaltung nach Anspruch 12 ist von Vorteil, daß durch einfach aufgebaute standardisierte und kostengünstige Mittel eine Arretierung bzw. Aufhebung der Arretierung möglich ist.

Durch die Weiterbildung nach Anspruch 13 wird erreicht, daß durch eine unmittelbare Verbindung des Betätigungselementes mit dem Positionier- und Arretierelement keine zusätzliche Führungselemente oder Halterungselemente für das Betätigungselement erforderlich sind.

Durch die Ausbildung nach Anspruch 14 kann eine platzsparende und konstruktiv einfach ausgestaltete Positionier- und Arretiervorrichtung für die Betätigung des Positionier- und Arretierelementes erreicht werden, dessen Betätigung durch einfach aufgebaute Betätigungselemente bzw. Hebelelemente, die über kurze Verstellwege eine Arretierstellung des Arretierfortsatzes aufheben können, durchgeführt werden kann.

Vorteilhaft ist auch eine Ausbildung nach Anspruch 15, da Teile des Lenkrahmens als Betätigungselemente für das Positionier- und Arretierelement ausgebildet ist.

Gemäß einer Ausbildung, wie im Anspruch 16 beschrieben, sind keine zusätzlichen Mittel für die Betätigung der Positionier- und Arretiervorrichtung im Tragrahmen anzubringen.

Von Vorteil ist auch eine Ausbildung nach Anspruch 17, da durch die Anbringung von Korkschichten an den Griffteilen der Betätigungselemente ein verrutschfreies Betätigen derselben durchführbar ist. Des weiteren weist der feuchtigkeitsregulierende Kork ein angenehmes Berührungsempfinden auf.

Dabei erweisen sich die Ausgestaltungen nach den Ansprüchen 18 bis 20 als vorteilhaft, da durch die konische Verjüngung des Arretierfortsatzes und die Rastausnehmung eine spielfrei in Eingriff bringbare Verbindung bzw. Arretierung des Rastelementes und des Positionierund Arretierelementes bzw. des Lenkrahmens und des Schwenkschiebers schaffbar ist.

Gemäß Anspruch 21 wird eine einfache kostengünstige Herstellung der Rastausnehmung ermöglicht.

Nach einer Ausbildung gemäß Anspruch 22 ist die Verwendung von in hohen Stückzahlen einfach zu produzierenden, kostengünstigen Bauelementen möglich.

Möglich ist dabei auch eine Ausbildung nach Anspruch 23, da dadurch die Verwendung von Materialien möglich ist, die keiner weiteren Verarbeitung, insbesondere Lackierung, Beschichtung etc. bedürfen.

Die Aufgabe der Erfindung wird aber auch durch die Merkmale des Anspruches 24 gelöst. Der sich durch die Merkmale des Kennzeichenteiles des Anspruches 24 ergebende überraschende Vorteil ist, daß die verwindungssteifen last- und momentenübertragenden Übertragungsorgane zum drehbaren Eingriff ineinandergreifende Führungsteile aufweisen, die im wesentlichen form- und/oder kraftschlüssig miteinander verbunden sind, wobei die Klemmteile der Übertragungsorgane in Längsrichtung der Formrohre zueinander durch Längspositionierfortsätze, die vor allem eine einfachere Montage ermöglichen, formschlüssig miteinander verbindet bzw. haltert. Ein weiterer Vorteil besteht vor allem auch darin, daß der Klemmteil über mehrere Befestigungselemente mit dem Formrohr verbunden ist, wodurch beim unerwünschten Loslösen eines der Befestigungsmittel dennoch eine tragende Verbindung des Übertragungsorganes mit dem Formrohr des Lenkrahmens oder Schwenkschiebers gegeben ist.

Vorteilhaft sind weiters die Ausbildungen nach den Ansprüchen 25 und 26, da durch eine derartige konstruktive Ausbildung die Klemmteile und die mit diesen verbundenen Tragelementen und Schwenkschieber spielfrei miteinander verbunden sind, wodurch über die gesamte Lebensdauer eines Kinderwagens ein im wesentlichen kraftloses bzw. verspannungsfreies Verschwenken des Schwenkschiebers gegenüber dem Unterrahmen möglich ist.

Die Aufgabe der Erfindung wird aber auch durch die Merkmale des Anspruches 27 gelöst. Der überraschende Vorteil dieser Lösung liegt darin, daß mit über eine längenveränderbare Stellvorrichtung der Verstelleinrichtung eine Neigung des Rückenteiles und Fußteiles getrennt voneinander durchführbar ist und damit eine individuelle Anpassung, beispielsweise an unterschiedliche Körpergrößen eines Kleinkindes, möglich ist. Die veränderbaren Positionen sind über eine Arretiervorrichtung im wesentlichen spielfrei arretierbar. Die hebelartige Ausbildung des Rückenteiles und Fußteiles, wobei ein Anlenkpunkt der Stellvorrichtungen außerhalb der Schwenkachsen des Rückenteiles und Fußteiles gelegen ist, ermöglicht eine nahezu kraft-, geräusch- und ruckfreie Verstellung der Neigung.

Die Aufgabe der Erfindung wird aber auch durch die Merkmale im Anspruch 28 gelöst. Der sich aus den Merkmalen des Kennzeichenteiles ergebende überraschende Vorteil dabei ist, daß der relativ zu einem Fußteil verstellbare Rückenteil sowie auch der Fußteil in deren zueinander eingestellten Lage bzw. Neigung verstell- und fixierbar sind und über eine den Fußteil und Rückenteil miteinander verbindenden längenveränderbaren Stellvorrichtung eine synchrone Verstellung des Fußteiles und Rückenteiles ermöglicht und deren Neigung des Fuß- und Rückenteiles gegenüber einem Querverbindungsteil bzw. Sitz- und/oder Liegeteil verstell- und fixierbar ist.

Gemäß den Ansprüchen 29 bis 31 ist eine bedarfsweise veränderbare Neigung des Fußteiles und/oder Rückenteiles gegenüber einem Querverbindungsteil einstellbar und arretierbar.

Schließlich wird die Aufgabe der Erfindung aber auch durch die Merkmale im Anspruch 32 gelöst. Der sich aus den Merkmalen des Kennzeichenteiles ergebende überraschende Vorteil dabei ist, daß durch die Spielfreiheit der Höhenverstelleinrichtung und der Gelenkanordnung sowie aller anderen zueinander positionierten Teile bzw. Bauelemente im Zusammenwirken mit der Achsfedervorrichtung das schwingungsbeaufschlagte Transportmittel, insbesondere der Kinderwagen, Schwingungen, insbesondere die Schwingungsamplitude, durch die Achsfedervorrichtung harmonisch gedämpft abklingen läßt, wodurch dem Kleinkind ein angenehmes Fahrverhalten ermöglicht wird.

Durch die Ausbildung nach Anspruch 33 ist es möglich, daß selbst bei hohen Krafteinwirkungen, insbesondere Schlägen, wie diese insbesondere von unebenen Fahrbahnen auf das Transportmittel, insbesondere den Kinderwagen, übertragen werden, durch die ein progressives Federkennlinienverhalten aufweisende Achsfedervorrichtung mit zunehmender Krafteinwirkung eine stärkere Dämpfung ausübt. Des weiteren ist auch von Vorteil, daß im wesentlichen ein Großteil der Schläge bzw. Kräfte von der Achsfedervorrichtung aufgenommen wird, so - daß der Tragrahmen, insbesondere Schwenkschieber und Lenkrahmen und gegebenenfalls der Unterrahmen, wesentlich kleiner bzw. dünnwandiger dimensionierbar ist, wodurch einerseits die Kosten für das erforderliche Material und andererseits eine leichtere Konstruktion ausgebildet werden kann.

Vorteilhaft ist auch die Verwendung von kostengünstigen standardisierten Aluminiumdruckgußteilen und/oder Aluminiumstranggußteilen für die mechanisch hoch belasteten Rastvorrichtungen und Gelenkanordnungen, wie im Anspruch 34 beschrieben, wodurch eine hohe gesamte Lebensdauer des Transportmittels, insbesondere des Kinderwagens, erreichbar ist.

Vorteilhaft ist auch die Verwendung von thermoplastischen Elastomeren, insbesondere vergossene Polyurethane für die Räder, wie im Anspruch 35 beschrieben ist, da diese eine hohe Verschleißfestigkeit und gute Dämpfung etc. aufweisen, wodurch ein Teil der durch Unebenheiten hervorgerufenen Stoßenergie von den Rädern absorbiert wird und dadurch einerseits eine dünnwandige, formstabile und verwindungssteife konstruktive Ausbildung des Kinderwagens und andererseits ein angenehmes bzw. ruhiges Fahrverhalten für das Kleinkind ermöglicht.

Abschließend ist auch die Verwendung von Profilen aus Aluminium von Vorteil, wie im Anspruch 36 beschrieben, da diese eine hohe Verwindungssteifigkeit und ein gutes Dämpfungsverhalten aufweisen, wodurch auftretende Schwingungen stark gedämpft werden können.

Zum besseren Verständnis der Erfindung wird diese im nachfolgenden anhand der in den Zeichnungen gezeigten Ausführungsbeispiele näher erläutert.

### Es zeigen:

- Fig. 1: ein erfindungsgemäßes Transportmittel, insbesondere Kinderwagen, in Gebrauchsstellung in Seitenansicht, geschnitten gemäß den Linien I-I in Fig. 2 und in stark vereinfachter, schematischer Darstellung;
- Fig. 2: das Transportmittel, insbesondere Kinderwagen, in Ansicht gemäß Pfeil II in Fig. 1 und in stark vereinfachter, schematischer Darstellung;
- Fig. 3: einen Teilbereich eines Schwenkschiebers mit Lenkrahmen und einer zwischen diesen angeordneten, erfindungsgemäßen Höhenverstelleinrichtung, geschnitten gemäß den Linien III - III in Fig. 2 und in stark vereinfachter, schematischer Darstellung;
- Fig. 4: einen Teilbereich des Schwenkschiebers und Lenkrahmens mit einem erfindungsgemäßen Betätigungselement in Draufsicht, teilweise geschnitten und in stark vereinfachter, schematischer Darstellung;
- Fig. 5: eine erfindungsgemäße Verstelleinrichtung mit einer Stellvorrichtung für den Rückenteil und Fußteil in Seitenansicht und in stark vereinfachter, schematischer Darstellung;
- Fig. 6: die erfindungsgemäße Verstelleinrichtung mit der Stellvorrichtung für den Rükkenteil und Fußteil in Draufsicht und in stark vereinfachter, schematischer Darstellung;
- Fig. 7: eine andere Ausführungsvariante der erfindungsgemäßen Verstelleinrichtung mit der Stellvorrichtung für den Rückenteil und Fußteil in Seitenansicht und in stark vereinfachter, schematischer Darstellung;
- Fig. 8: eine erfindungsgemäße Arretiervorrichtung für die Verstelleinrichtung in Seitenansicht, teilweise geschnitten und in stark vereinfachter, schematischer Darstellung;
- Fig. 9: die andere Variante der Arretiervorrichtung für die Verstelleinrichtung in Seitenansicht, geschnitten und in stark vereinfachter, schematischer Darstellung;
- Fig. 10: eine erfindungsgemäße Gelenkanordnung in Ansicht, teilweise geschnitten und in stark vereinfachter, schematischer Darstellung;
- Fig. 11: das erfindungsgemäße Transportmittel, insbesondere Kinderwagen, im zusammengeklappten Zustand in Seitenansicht und in stark vereinfachter, schematischer Darstellung;
- Fig. 12: eine erfindungsgemäße Verriegelungsvorrichtung für den zusammengeklappten Kinderwagen, in Längsschnitt und in stark vereinfachter, schematischer Darstellung;
- Fig. 13: eine Ausführungsvariante für ein erfindungsgemäßes Fahrwerk in Seitenansicht und in stark vereinfachter, schematischer Darstellung;
- Fig. 14: eine andere Ausführungsvariante des erfindungsgemäßen Fahrwerkes in Seitenansicht und in stark vereinfachter, schematischer Darstellung;
- Fig. 15: eine erfindungsgemäße Längenverstelleinrichtung für einen Unterrahmen, insbesondere eines Tragelementes, in Draufsicht, geschnitten und in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

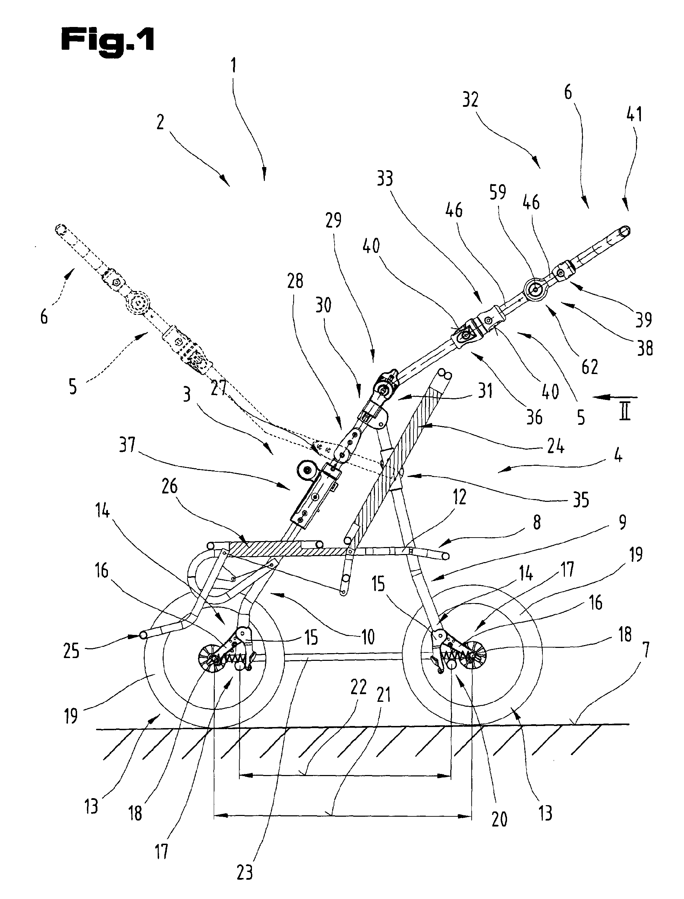

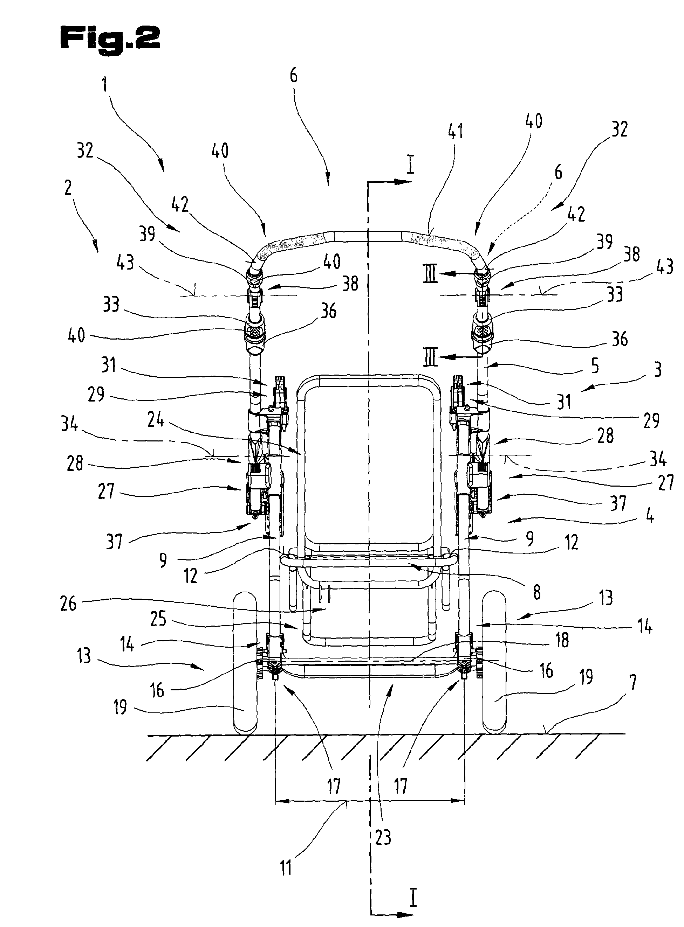

In den gemeinsam beschriebenen Fig. 1 und 2 ist ein Transportmittel 1, insbesondere ein Kinderwagen 2, in Seitenansicht und in stark vereinfachter, schematischer Darstellung gezeigt. Ein Tragrahmen 3 des Transportmittels 1 weist einen Unterrahmen 4, einen Schwenkschieber 5 bzw. Lenkschieber und einen mit diesem verschwenkbeweglich verbundenen Lenkrahmen 6 auf. Der Unterrahmen 4 weist zumindest zwei sich in Richtung einer Fahrbahnoberfläche 7 zueinander aufweitende, mit über zumindest ein Querverbindungsteil 8 miteinander verbundene und verschwenkbewegliche Tragelemente 9; 10 auf. Das rahmenförmige, einen flächigen Sitz- und/oder Liegeteil aufnehmende Querverbindungsteil 8 ist mit einem zwischen in Richtung einer Breite 11 parallel zueinander verlaufenden profilartigen Schenkeln 12 angeordneten Auflage- bzw. Stützteil, der nicht weiters dargestellt ist, ausgestattet, der zumindest einen Teilbereich für den flächigen Sitz- und/oder Liegeteil ausbildet. Die Breite 11 des Querverbindungsteiles 8 distanziert die zumindest quer zum Querverbindungsteil 8 verlaufenden profilartigen Tragelemente 9; 10. Ein einem Fahrwerk 13 nähergelegener Endbereich 14 der Tragelemente 9; 10 ist mit einer Verbindungsschenkel 15 und Schwenkarme 16 umfassenden Achsfedervorrichtung 17 ausgestattet, wovon einer der beiden Tragelemente 9; 10, bevorzugt die jeweils an den in Längsrichtung des Transportmittels 1 voneinander distanzierten Tragelementen 9 und 10 angeordneten Verbindungsschenkeln 15 mit den Tragelementen 9; 10 bewegungsfest bzw. starr verbunden ist. Die weiteren, zweckmäßig ein gleiches Schwenklager wie die Verbindungsschenkel 15 aufweisenden Schwenkarme 16 umfassen zumindest bereichsweise die Tragelemente 9; 10 und die zwischen den Tragelementen 9; 10 schwenkbeweglich gelagerten Schwenkarme 16, wobei die Verbindungsschenkel 15 und die Schwenkarme 16 in Richtung der Fahrbahnoberfläche 7 zueinander aufweitend verlaufen. Die Achsfedervorrichtung 17, insbesondere die Verbindungsschenkel 15 und Schwenkarme 16 weisen in einem dem Schwenklager gegenüberliegenden Endbereich in Richtung der Fahrbahnoberfläche 7 eine eine Fahrachse 18 mit Rädern 19 verbindende elastisch rückstellbare Federanordnung 20, insbesondere Federn, auf, die durch mehrere, bevorzugt ineinander angeordnete und miteinander verbundene, unterschiedliche Federsteifigkeiten aufweisende Zugfedern gebildet ist. Die Federn, insbesondere Zugfedern, werden von dem Verbindungsschenkel 15 und von der Fahrachse 18 des Fahrwerkes 13 positioniert gehalten. Besonders vorteilhaft bei einer derartigen Ausbildung ist, daß durch das Hintereinanderschalten von mehreren unterschiedliche Federkonstanten aufweisenden Federn, die ineinander verhängt sind, ein progressives Kennlinienverhalten, das mit zunehmender Belastung ein schnelleres Abklingen von Schwingungen ermöglicht, erreichbar ist. Dadurch kann das unter Schwingung versetzte Transportmittel 1, insbesondere der Kinderwagen 2, schneller in einen Ruhezustand verbracht werden, was vor allem zu einem angenehmeren Fahrverhalten auf unebenen Straßen bzw. Wegen führt.

Ein zwischen den voneinander distanzierten Fahrachsen 18 in Längsrichtung des Transportmittels 1 bemessener Längsabstand 21 ist bevorzugt größer bemessen als ein Längsabstand 22 der in Längsrichtung voneinander distanzierten Endbereiche 14 der Tragelemente 9; 10. Die profilartige bzw. rohrförmige Fahrachse 18 des Fahrwerkes 13 weist in einer zu ihrer Längserstreckung senkrechten Ebene einen Kreisringquerschnitt auf, dessen Außendurchmesser zwischen 10 und 22 mm, bevorzugt zwischen 14 und 20 mm, und eine Wandstärke zwischen 1 mm und 4 mm, bevorzugt zwischen 1,5 und 2,5 mm beträgt. Die Fahrachse 18 erstreckt sich zwischen den Tragelementen 9; 10 in Richtung der Breite 11. Ein sich zumindest über einen Teil in Längsrichtung des Transportmittels 1 zwischen den Fahrachsen 18 und in Richtung einer Breite 11 zwischen den gegenüberliegenden Tragelementen 9; 10 erstreckendes, bedarfsweise zusammenklappbares Ablagefach 23 kann aus allen aus dem Stand der Technik bekannten natürlichen Materialien, wie beispielsweise Rattangeflechte, Weidengeflechte, Leinen etc. gefertigt werden.

Die Räder 19 können natürlich aus allen aus dem Stand der Technik bekannten Materialien ein- oder mehrteilig gefertigt werden, wobei ein das Speicherrad umgebender Reifen mehrschichtig ausgebildet sein kann und eventuell unterschiedliche Härten aufweisende Schichten bzw. Lagen aufweisen kann.

Wie den Fig. 1 und 2 weiters zu entnehmen, ist das Transportmittel 1 mit einem in Längserstreckung des Querverbindungsteiles 8, der zwischen dem Schwenkschieber 5 bzw. Lenkschieber und der Achsfedervorrichtung 17 angeordnet ist, angeordneten Rückenteil 24 sowie einem Fußteil 25 ausgestattet, die voneinander distanziert sind.. Der relativ zu dem Fußteil 25 verschwenkbewegliche Rückenteil 24 ist gegenüber dem mit den Tragelementen 9 und 10 verbundenen Querverbindungsteil 8 verschwenkbeweglich gelagert, wobei dieser von den an den beiden in Richtung der Breite 11 gegenüberliegenden Schenkel 12 aufgenommen wird. Dem rahmenförmigen und abgewinkelten Rückenteil 24 und dem rahmenförmigen und abgewinkelten Fußteil 25 ist eine noch genauer zu erläuternde Verstelleinrichtung 26 zugeordnet.

Der abgewinkelt verlaufende, rahmenförmige Schwenkschieber 5 bzw. Lenkschieber weist an einem dem Unterrahmen 4 zugewandten Endbereich 27 eine verwindungssteife, robust aufgebaute, Verschwenkbewegungen aufnehmende Gelenkanordnung 28 auf, wie diese noch näher erläutert werden wird, die zweckmäßig mehrteilig ausgebildet ist. Dem Fahrwerk 13 gegenüberliegende Endbereiche 29 der Tragelemente 9 weisen im Bereich von Stirnseiten jeweils ein eine Halte- und Arretiervorrichtung 30 aufweisendes Abdeckelement 31 auf, wobei der Schwenkschieber 5 bzw. Lenkschieber in seiner eingerasteten Stellung positioniert gehalten ist. Derartige Abdeckelemente 31 und Halte- und Arretiervorrichtungen 30 sind aus dem Stand der Technik bekannt und sind nicht Gegenstand dieser Anmeldung. Es können daher alle aus dem Stand der Technik bekannten Abdeckelemente 31 verwendet werden.

Wie durch die strichlierte Eintragung in der Fig. 1 dargestellt, ist es möglich, den Schwenkschieber 5 durch Betätigung von zwischen einer Höhenverstelleinrichtung 32 und den lastund/oder momentenübertragenden Gelenkanordnungen 28 angeordneten hülsenförmigen Betätigungselementen 33 von einer ersten Stellung in eine weitere Stellung durch das Ausrasten der in einer Sperrstellung befindlichen federbelasteten Bolzen zu verbringen. Nach erfolgter Betätigung der Betätigungselemente 33 werden die federbelasteten Bolzen wieder in deren die Stirnkante der Endbereiche des Schwenkschiebers 5 überragenden Stellung verbracht, wonach der Schwenkschieber 5 um eine Schwenkachse 34 so lange verschwenkbar ist, bis die Endbereiche 27 des Schwenkschiebers 5 im Bereich von den Gelenkanordnungen 28 gegenüberliegenden Arretiervorrichtungen 35 gelangen, wobei diese in Verschwenkrichtung kontinuierlich ansteigende, die Bolzen abstützende Stützflächen aufweisen, die die Bolzen entgegen ihrer Vorspannung drücken, bis diese zu den tangential zu dem Schwenkradius verlaufende Flächenteile gelangen, wo die Bolzen in eine in diese vertieft angeordnete Aufnahme einrasten.

Wie der Fig. 1 weiters zu entnehmen, weist der Schwenkschieber 5 zwischen den Höhenverstelleinrichtungen 32 und den last- und/oder momentenübertragenden Gelenkanordnungen 28 weitere hülsenförmige Betätigungselemente 36 auf, welche zum bedarfsweisen Zusammenklappen des Transportmittels 1, insbesondere des Kinderwagens 2, ausgebildet sind, wobei bei einer Betätigung Verriegelungsvorrichtungen 37 bedarfsweise entriegelbar sind.

Zumindest zwei sich quer zur Fahrtrichtung bzw. parallel zu den Fahrachsen 18 gegenüberliegende, den Schwenkschieber 5 und den Lenkrahmen 6 schwenkbeweglich miteinander verbindende Rastvorrichtungen 38 sind über weitere hülsenförmige Betätigungselemente 39 betätigbar, wodurch der Lenkrahmen 6 zu dem Schwenkschieber 5 relativ verschwenkbar ist. Dadurch ist eine zwischen der Fahrbahnoberfläche 7 und dem Lenkrahmen 6 variierbare Bedienungshöhe individuell einstellbar.

Wie der Fig. 2 besser zu entnehmen, weist der etwa U-förmig ausgebildete Lenkrahmen 6 zumindest über einen Teil seiner Länge, insbesondere in den konvex gekrümmten Übergangsbereichen, Griffteile 40 zwischen einer Basis 41 und Schenkeln 42 auf, die mit Kork überzogen bzw. umhüllt sind. Ein wesentlicher Vorteil der Verwendung von Kork liegt vor allem darin, daß dieser ein temperaturausgleichendes Isoliermaterial ausbildet, welches antibakteriell und somit hygienisch ist. Ein weiterer Vorteil liegt darin, daß durch die Feuchtigkeitsregulierung ein Rutschen zwischen den Händen eines Benutzers und dem Transportmittel 1, insbesondere dem Kinderwagen 2, unterbunden wird. Natürlich besteht auch die Möglichkeit, Griffteile der bevorzugt hülsenförmig ausgebildeten Betätigungselemente 33; 36; 39 ebenfalls mit Kork zu überziehen bzw. zu umhüllen.

Es sei darauf hingewiesen, daß die nicht weiters dargestellten Sitz- und/oder Liegeteile, Einkaufskörbe, Dach, Sonnenschutz, Ablagefach, Tragnest, Tragetasche etc. aus allen aus dem Stand der Technik bekannten natürlichen Materialien, wie Rattanpaneele, Weidegeflechte, Kork etc. ausgebildet werden können. Zweckmäßig weisen der Lenkrahmen 6 und der Unterrahmen 4, insbesondere die Tragelemente 9; 10 und das Querverbindungsteil 8, der Fußteil 25, der Rückenteil 24, einen rohrförmigen Querschnitt auf, wodurch standardisierte und kostengünstige Hohlprofile bzw. Formrohre aus Stahlwerkstoffen oder hochfesten Kunststoffen verwendet werden können.

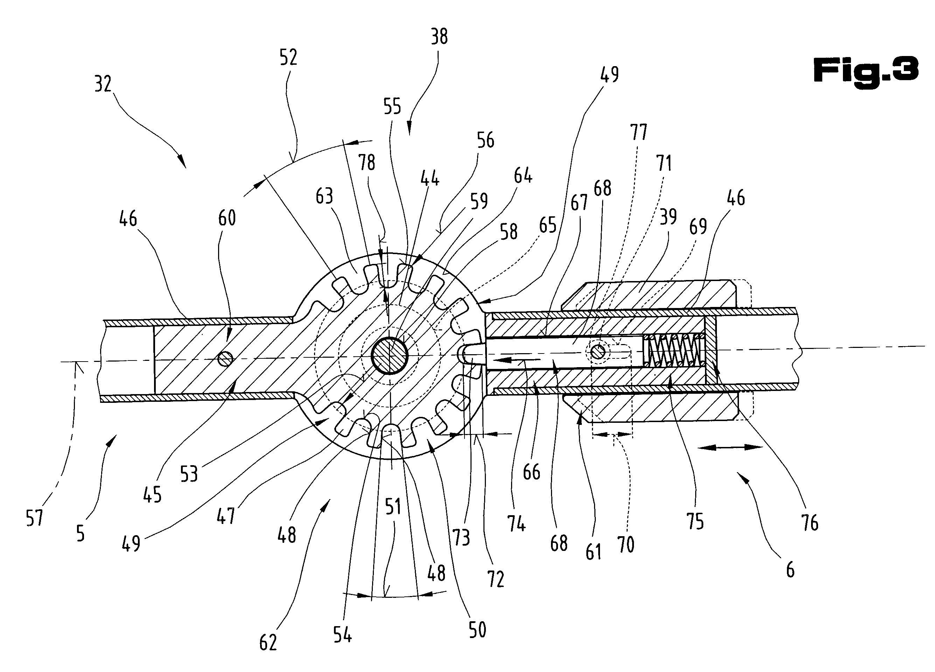

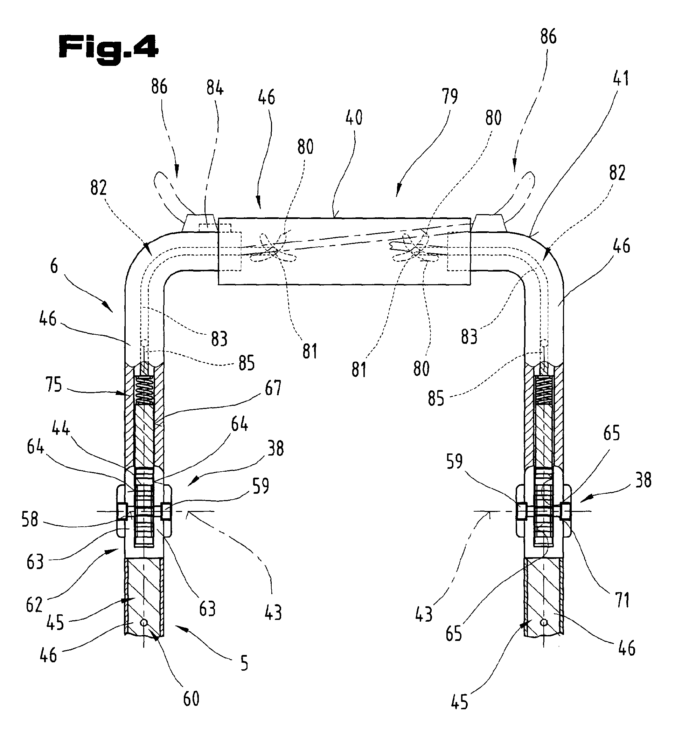

In den gemeinsam beschriebenen Fig. 3 und 4 ist ein Teilbereich des Schwenkschiebers 5 mit dem diesem zugeordneten Lenkrahmen 6 mit der erfindungsgemäßen Höhenverstelleinrichtung 32 in Seitenansicht, geschnitten und in stark vereinfachter, schematischer Darstellung gezeigt.

Die zum stufenweisen Verstellen bzw. Verschwenken des Lenkrahmens 6 um eine quer zur Fahrtrichtung bzw. parallel zu der Fahrachse 18 des Transportmittels 1 verlaufenden Schwenkachse 43 angeordneten Höhenverstelleinrichtungen 32 sind durch last- und/oder momentenübertragende Rastvorrichtungen 38 gebildet, welche jeweils zumindest ein mit dem Schwenkschieber 5 oder Lenkrahmen 6 verbundenes Rastelement 44 aufweisen. Die Schwenkachsen 43 der beiden gegenüberliegenden Rastvorrichtungen 38 verlaufen zueinander deckungsgleich. Wie in der Fig. 3 dargestellt, ragt ein vom Rastelement 44 ausgebildeter zylindrischer Fortsatz 45 in das vom Schwenkschieber 5 ausgebildete Hohlprofil bzw. Formrohr 46 vor, wodurch sich der Fortsatz 45 mit dem Formrohr 46 zumindest bereichsweise überdeckt. Das vom Formrohr 46 des Schwenkschiebers 5 form- und/oder kraftschlüssig gehalterte Rastelement 44 ist zumindest über einen Teil seines Umfanges mit mehreren, bevorzugt voneinander um eine gleiche Teilung beabstandeten Verzahnungselementen 47 ausgestattet, welche in Richtung der Schwenkachse 43 konisch aufeinander zulaufende Zahnflanken 48 aufweisen, wodurch zwischen zwei zueinander benachbarter Verzahnungselemente 47 eine sich in Richtung der Schwenkachse 43 konisch verjüngende Rastausnehmung 49, insbesondere eine Aufnahmenut 50, ausgebildet wird. Ein zwischen den Zahnflanken 48 der Verzahnungselemente 47 eingeschlossener Öffnungswinkel 51, der zwischen 20° und 40°, bevorzugt zwischen 30° und 34° beträgt, ist größer bemessen als ein zwischen zwei zueinander benachbarten Verzahnungselementen 47 bemessener Teilungswinkel 52, der zwischen 15° und 30 °, bevorzugt zwischen 18° und 28° beträgt. Die zwischen den Verzahnungselementen 47 ausgebildeten Rastausnehmungen 49, insbesondere die Aufnahmenuten 50, bilden zwischen Übergangsbereichen zwischen zwei einander zugewandten Zahnflanken 48 einen mit einem Radius 53 gekrümmten Nutboden 54 aus, wobei der Radius zwischen 0,5 und 2,5 mm liegt, insbesondere 1,6 mm beträgt. Die Nutböden 54 können auch im wesentlichen linear verlaufen. Natürlich können die aufeinander abgestimmten Öffnungswinkel 51 und Teilungswinkel 52 im wesentlichen jeden beliebigen Wert annehmen. An einer zwischen den jeweils gegenüberliegenden Zahnflanken 48 der Verzahnungselemente 47, am äußeren Umfang des Rastelementes 44 ausgebildeten Kopfflanke 55 werden Radien 56 ausgebildet, die zwischen 0,5 bis 1,5 mm liegen, insbesondere 1 mm betragen. Eine im Zentrum des Rastelementes 44 konzentrisch um eine Längsmittelachse 57 umlaufende Führungsbohrung 58 ist bevorzugt geringfügig größer bemessen als ein mehrere Bauelemente bzw. Bauteile verbindender Führungsbolzen 59. Das Rastelement 44 ist mit zumindest einem im Bereich des Fortsatzes 45 angeordneten Positionier- und Fixierelement 60, insbesondere Bolzen, Spannstifte, Klemmteile etc., welches zwischen dem Formrohr 46 und dem Fortsatz 45 positioniert ist, zu bzw. mit dem Formrohr 46 des Schwenkschiebers 5 positioniert gehaltert. Natürlich kann das Positionier- und Fixierelement 60 durch alle aus dem Stand der Technik bekannten, eine Lage fixierenden Elemente gebildet werden.

Des weiteren bildet das Rastelement 44 in einem Übergangsbereich zwischen dem konzentrisch um die Längsmittelachse 57 umlaufenden Grundkörper des Rastelementes 44 und dem zylindrischen Fortsatz 45 gekrümmte, insbesondere konkav aufeinander zulaufende Wandausbildungen aus.

Der dem Schwenkschieber 5 gegenüberliegende Lenkrahmen 6, der als Formrohr 46 ausgebildet ist, ist mit einer in das Formrohr 46 eingesetzten und mit diesem bewegungsfest verbundenen Positionier- und Arretiervorrichtung 61 ausgestattet, die ein gabelkopfförmiges Führungsteil 62 mit zumindest zwei in Richtung einer Breite des Rastelementes 44 voneinander distanzierte scheibenförmigen Führungselemente 63 aufweist, der das scheibenförmige Rastelement 44 zumindest bereichsweise überdeckt bzw. umschließt oder aufnimmt. Das mit dem Führungsteil 62, insbesondere den scheibenförmigen Führungselementen 63, über den Führungsbolzen 59 verschwenkbeweglich verbundene Rastelement 44, das zwischen den beidseitig gegenüberliegenden kreisrunden Führungsflächen 64 angeordnet ist, weist planparallel zu den Führungsflächen 64 verlaufende Führungsflächen 65 auf, wodurch eine spielfreie Führung in Richtung der Schwenkachse 43 ausgebildet ist. Eine Breite der Verzahnungselemente 47 nimmt zwischen der Führungsfläche 65 in radialer Richtung geringfügig ab, sodaß nur die Führungsflächen 65 an den Führungsflächen 64 des Führungsteiles 62 aneinanderliegen. Die Positionier- und Arretiervorrichtung 61 bzw. der gabelkopfförmige Führungsteil 62 weisen einen in das Formrohr 46 des Lenkrahmens 6 eingesetzten hohlzylinderförmigen Fortsatz 66 auf, der mit diesem bewegungsfest verbunden und/oder gegebenenfalls durch zusätzliche Fixierelemente, Bolzen, Spannstifte, etc. fixiert gehalten ist. Der Fortsatz 66 weist in dessen Längserstreckung ein konzentrisch um die Längsmittellinie 57 umlaufendes zylindrisches hohles Führungsstück 67 auf, in dem ein längsverschiebbares stabförmiges Positionier- und Arretierelement 68 angeordnet ist. Ein Mantel des hohlzylinderförmigen bzw. kreisringförmigen Fortsatzes 66 ist im Bereich einer Länge des Führungsstückes 67 von zwei in einer gleichen Ebene liegenden und gegenüberliegenden langlochförmigen Ausnehmungen 69 durchsetzt, deren Länge 70 zumindest um einen Durchmesser eines Bolzens 71 und einer Eingriffhöhe 72 eines Arretierfortsatzes 73 zu bemessen ist. Der Arretierfortsatz 73 wird von dem Positionier- und Arretierelement 68 ausgebildet. Natürlich kann das Positionier- und Arretierelement 68 auch mehrere in Eingriff bringbare Arretierfortsätze 73 aufweisen. Gleichermaßen ist auch ein entsprechender Federweg einer in Arretierrichtung - gemäß Pfeil 74 - entgegenwirkenden Feder 75 bzw. Federanordnung zu überwinden. Die Feder 75 bzw. Federanordnung, insbesondere eine Druckfeder, ist bevorzugt in einem vom Arretierfortsatz 73 gegenüberliegenden Endbereich des Führungsstückes 67 angeordnet, welche sich bevorzugt auf einem das Führungsstück 67 verschließenden Verschlußelement 76 und dem Positionier - und Arretierelement 68 abstützt.

Das im Bereich des Führungsstückes 67 und dieses zumindest bereichsweise überdeckende hülsenartige Betätigungselement 39 weist eine sich mit der Ausnehmung 69 des Positionier - und Arretierelementes 68 zumindest bereichsweise überdeckende Bohrung 77 auf. Wie in dieser Fig. nicht ersichtlich, ist das Formrohr 46 des Lenkrahmens 6 oder Schwenkschiebers 5 mit einer wenigstens gleiche Höhen- und Längenabmessungen aufweisenden Ausnehmung durchsetzt, welche mit der Ausnehmung 69 des Positionier- und Arretierelementes 68 korrespondiert. Über den Bolzen 71 ist nunmehr das hülsenförmige Betätigungselement 39 mit dem federvorbelasteten Positionier- und Arretierelement 68 und dem Formrohr 46 des Lenkrahmen 6 oder Schwenkschiebers 5 längenverschiebbar auf dem Formrohr 46 befestigt.

Das Verschlußelement 76 ist bevorzugt mit der Positionier- und Arretiervorrichtung 60 im stirnseitigen Endbereich mit dieser verbunden, insbesondere verklebt.

Der mit der Rastausnehmung 49, insbesondere der Aufnahmenut 50 korrespondierende, sich in Richtung des Rastelementes 44 konisch verjüngende Arretierfortsatz 73 wird in einer Sperrstellung, wie in der Fig. 3 dargestellt, in Eingriff mit dem Rastelement 44 verbracht, wonach bei einer entgegen der Arretierrichtung - gemäß Pfeil 74 - entgegenwirkenden, von dem Betätigungselement 39 ausgehenden Betätigungskraft der Arretierfortsatz 73 außer Eingriff in eine Freigabestellung bringt. Dabei ist das Betätigungselement 39 in Längsrichtung des Formrohres 46 um einen Längsabstand, der wenigstens der Eingriffhöhe 72 entspricht, zu überwinden, wie dieser in strichlierten Linien dargestellt ist, worauf eine Verstellbewegung des Lenkrahmens 6 in einer zur Längsmittelachse 57 radialen Richtung durchführbar ist.

Eine Tiefe 78 der Rastausnehmungen 49, insbesondere der Aufnahmenuten 50, ist zweckmäßig größer bemessen als eine Eingriffshöhe 72 des Arretierfortsatzes 73. Dadurch ergibt sich der Vorteil, daß selbst bei verschleißbedingten Abnützungen immer nur die sich in Richtung des Zentrums des Rastelementes 44 konisch verjüngenden Stützflächen des Arretierfortsatzes 73 an den mit diesen korrespondierenden Stützflächen bzw. Zahnflanken 48 des Rastelementes 44 abstützen. Erst durch eine Betätigung der Betätigungselemente 39 ist eine Aufhebung der in Arretierrichtung - gemäß Pfeil 74 - wirkenden Federkraft und somit eine Verstellung in einer zur Längsmittelachse 57 radialen Richtung möglich.

Das Betätigungselement 39 und der Arretierfortsatz 73 werden infolge der Federbelastung bzw. Vorspannung des Positionier- und Arretierelementes 68 in ihre Ausgangsstellung bzw. Arretierstellung, wie diese in festen Linien dargestellt ist, selbsttätig verbracht, wonach eine Freigabestellung, wie diese in strichlierten Linien dargestellt ist, nur durch Betätigen der Betätigungselemente 39, daher durch Zurückziehen dieser in Richtung der Basis 41 erreicht werden kann.

Natürlich kann eine Betätigung des Positionier- und Arretierelementes 68 über alle anderen aus dem Stand der Technik bekannten Betätigungseinrichtungen, wie beispielsweise Seilzug etc., durchgeführt werden.

Wie aus der Fig. 3 weiters zu entnehmen, ist das Führungsteil 62 mit dem Rastelement 44 verbunden, insbesondere verschraubt. Besonders vorteilhaft bei dieser Ausführung ist, daß der Arretierfortsatz 73 selbstzentrierend und spielfrei in Eingriff mit dem Rastelement 44, insbesondere der Rastausnehmung 49, verbracht wird, wobei zwischen einem Nutboden 54 der Aufnahmenut 50 und dem Arretierfortsatz 73 ein Abstand ausgebildet ist, wodurch sich ausschließlich die geneigten Zahnflanken 48 bzw. Stützflächen der Verzahnungselemente 47 und der Positionier- und Arretierelemente 68 bzw. des Arretierfortsatzes 73 aufeinander abstützen.

Eine andere, nicht weiters dargestellte Ausführungsvariante besteht darin, daß der Arretierfortsatz 73 in eine sacklochförmige, insbesondere in eine in Richtung der Schwenkachse 43 sich konisch verjüngende Bohrung des Rastelementes 44 eingreift. Selbstverständlich besteht auch die Möglichkeit, daß das Positionier- und Arretierelement 68 mehrere Arretierfortsätze 73 aufweist, welche gleichzeitig oder wechselweise in mehrere Rastausnehmungen 49 eingreifen.

Eine andere, nicht weiters dargestellte Ausführungsvariante besteht darin, daß die Rastvorrichtung 38 mehrere in Richtung der Schwenkachse 43 miteinander in Eingriff bringbare Rastelemente 44 und Positionier- und Arretierelemente 68 aufweist, wobei zumindest eines der beiden Elemente in Längsrichtung der Schwenkachse 43 verstellbar ausgebildet ist, wonach zumindest ein Arretierfortsatz 73 in zumindest eine Rastausnehmung 49 vorragt und eine verstellte Position des Lenkrahmens 6 zu dem Schwenkschieber 5 arretiert. Eine derartige, nach dem Prinzip einer Klauenkupplung funktionierende Rastvorrichtung 38 ist über eine bereits aus dem Stand der Technik bekannte Betätigungsvorrichtung in einer Längsrichtung der Schwenkachse 43 wirkenden Betätigungsrichtung verstellbar.

Eine andere in der Fig. 4 dargestellte Ausführungsvariante für die Betätigung der Positionier- und Arretierelemente 68 besteht darin, daß im Bereich der Basis 41 des Lenkrahmens 6 ein verdrehbewegliches, ein Betätigungselement 79 bildendes Formrohr 46, das den Lenkrahmen 6 bereichsweise überdeckt, angeordnet ist. Das rohrförmige Betätigungselement 79 weist mehrere in der Wandung vertieft angeordnete und diametral gegenüberliegende, zumindest über einen Teil des Umfanges des Formrohres 46 sich kreuzende bzw. schneidende kreisbogenförmige Kulissenbahnen, insbesondere Ausnehmungen 80 bzw. Vertiefungen auf, die sich zumindest bereichsweise überdecken. Zwischen den sich diametral gegenüberliegenden Ausnehmungen 80 erstreckt sich ein zylinderförmiges Wickelelement 81, mit welchem über ein im Inneren des Formrohres 46 des Lenkrahmens 6 oder Schwenkschiebers 5 angeordnetes Zugmittel 82, insbesondere Seil 83, das Positionier- und Arretierelement 68 betätigbar ist. Natürlich kann das Zugmittel 82 auch außerhalb am Formrohr 46 des Lenkrahmens 6 oder Schwenkschiebers 5 angeordnet werden. Jedem Positionier- und Arretierelement 68 sind zumindest ein Zugmittel 82, ein Wickelelement 81 und wenigstens zwei diametral gegenüberliegende Ausnehmungen 80 zugeordnet. Bevorzugt durchragt eine der Ausnehmungen 80 die Wandstärke des Betätigungselementes 79, wodurch eine Montage des Wickelelementes 81 vereinfacht wird. Bevorzugt weisen die in die Ausnehmungen 80 ragenden Endbereiche der Wickelelemente 81 radial umlaufende Wälzelemente auf, die infolge einer Verdrehbewegung des Betätigungselementes 79 eine Relativverdrehung bzw. Relativverlagerung des Wickelelementes 81 zu den Ausnehmungen 62 bewirken und gleichermaßen das Zugmittel 82 aufwikkeln und infolge der Verkürzung dessen Länge das Positionier- und Arretierelement 68 aus seiner Arretierstellung in eine Freigabestellung verbringen und eine Verstellung der Bedienungshöhe ermöglichen. Das innerhalb des Formrohres 46 des Lenkrahmens 6 angeordnete Zugmittel 82 ist zumindest bereichsweise von einem nicht weiters dargestellten Führungselement bzw. Führungsorgan umhüllt und geführt. Der Griffteil 40 des Betätigungselementes 79 wird bevorzugt mit einer auf diesem aufgeklebten Korkschichte umhüllt. Um eine unerwünschte Betätigung bzw. Verdrehung des Betätigungselementes 79 zu unterbinden, sind, bevor eine Verdrehung bzw. Betätigung stattfinden kann, ein oder mehrere zwischen dem Betätigungselement 79 und dem Lenkrahmen 6 angeordnete, bereits aus dem Stand der Technik bekannte Arretierelemente 84, wie dieses in strichpunktierten Linien schematisch dargestellt ist, zusätzlich zu betätigen.

Wie der Fig. 4 weiters zu entnehmen, weist das Positionier- und Arretierelement 68 in einem dem Arretierfortsatz 73 gegenüberliegenden Endbereich einen gegebenenfalls mit einem kleineren Durchmesser bemessenen Betätigungsfortsatz 85 auf, der mit einer von dem Zugmittel 82 durchragten Bohrung durchsetzt ist. In einem zwischen der Innenfläche des Führungsstükkes 67 und der Außenfläche des Betätigungsfortsatzes 85 gebildeten Hohlraum ist die Feder 75 bzw. Federanordnung, insbesondere eine Druckfeder, angeordnet.

Eine weitere Ausführung für die Betätigung des Arretierfortsatzes 73 besteht darin, daß im Bereich der Basis 41 des Lenkrahmens 6 jeweils für eine der Rastvorrichtungen 38 zumindest ein, wie in strichpunktierten Linien dargestellt, Hebelelement 86 für die Verstellung bzw. Verschwenkung des Lenkrahmens 6 gegenüber dem Schwenkschieber 5 angeordnet ist.

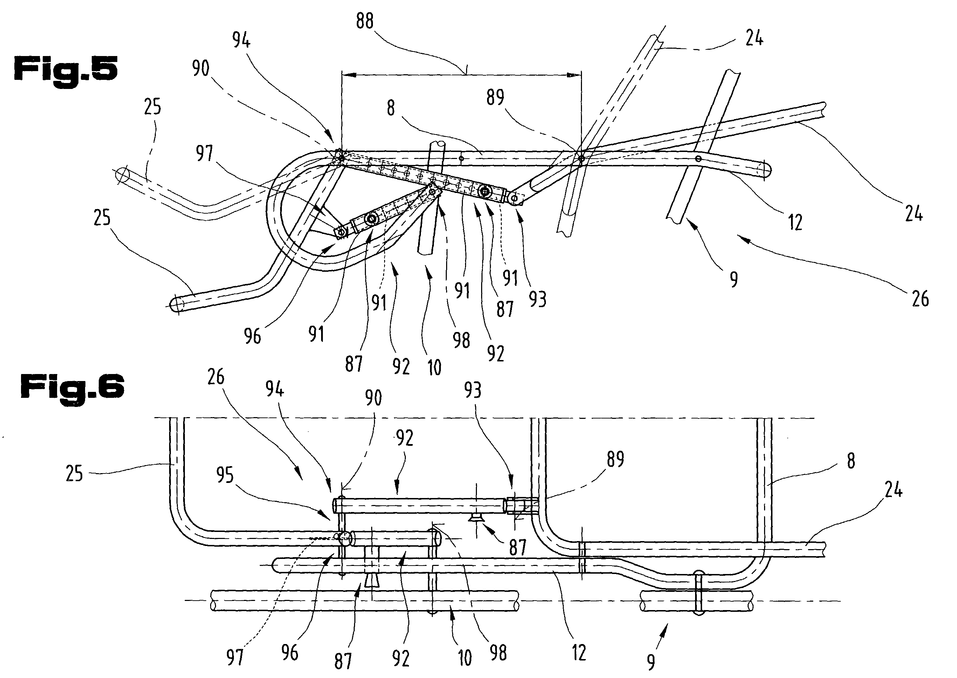

In den gemeinsam beschriebenen Fig. 5 bis 9 ist eine Verstelleinrichtung 26 mit einer dieser zugeordneten Arretiervorrichtung 87 in unterschiedlichen Ansichten dargestellt. In der Fig. 5 ist die Verstelleinrichtung 26 in Seitenansicht und in der Fig. 6 in Draufsicht dargestellt. Die in einem in Längsrichtung des Querverbindungsteiles 8 in einem Abstand 88 voneinander distanzierten Schwenkachsen 89; 90 des Rückenteiles 24 und Fußteiles 25 lagern diese verschwenkbeweglich. Über eine teleskopierbare, Stellelemente 91 aufweisende Stellvorrichtung 92 der Verstelleinrichtung 26 sind der Fußteil 25 und Rückenteil 24 in deren Neigung beliebig verstellbar. Ein in Richtung des Fußteiles 25 die Schwenkachse 89 des Rückenteiles 24 überragender Überstand bildet im stirnseitigen Endbereich einen ersten Anlenkpunkt 93 für die längenveränderbare Stellvorrichtung 92 bzw. dem Stellelement 91 aus. Ein weiterer, dem ersten Anlenkpunkt 93 gegenüberliegender und distanzierter Anlenkpunkt 94, der zweckmäßig mit der Schwenkachse 90 des Fußteiles 25 deckungsgleich verläuft, wird von einem mit dem Querverbindungsteil 8 bewegungsfest verbundenen Verbindungselement 95 gebildet, das gleichermaßen für den Fußteil 25 ein Lagerungselement ausbildet. Die längenveränderbaren Stellelemente 91 sind in den Anlenkpunkten 93; 94 verschwenkbeweglich gelagert. Bevorzugt werden zumindest zwei ineinandergeführte Stellelemente 91 für die Stellvorrichtung 92 verwendet.

Ein Anlenkpunkt 96 für die Stellvorrichtung 92 des Fußteiles 25 ist durch eine zwischen der Schwenkachse 90 und dem dieser gegenüberliegenden Endbereich angeordneten, bevorzugt angeschweißten Befestigungswange 97 gebildet, wobei eine weitere, dem Anlenkpunkt 96 gegenüberliegende Schwenkachse 98 von einem Endbereich des gekrümmt ausgebildeten Querverbindungsteiles 8 ausgebildet wird.

Der zwischen dem Querverbindungsteil 8 und den beiden Schwenkachsen 89; 90 der längenveränderbaren Stellvorrichtung 92 und dem Rückenteil 24, sowie die Stellvorrichtung 92 und der Querverbindungsteil 8 zwischen einem Anlenkpunkt 93 und der längenveränderbaren Stellvorrichtung 92 des Rückenteiles 24 bilden ein Mehreck, insbesondere Dreieck oder Rhombus, oder Trapez, etc. aus, wobei der Fußteil 25 mit einem Ende der weiteren Stellvorrichtung 92 verbunden ist, und ein anderes Ende mit dem Querverbindungsteil 8 bevorzugt im Bereich der Schwenkachse 98 mit dem Tragelement 10 gelenkig verbindet. Daher sind der Querverbindungsteil 8 und die Stellvorrichtungen 92 des Rückenteiles 24 und/oder Fußteiles 25 geneigt zueinander angeordnet. Natürlich kann die Stellvorrichtungen 92 auch durch mehrere gekrümmte, insbesondere konvex zu dem Querverbindungsteil 8 ineinandergreifende bzw. ineinandergeführte Stellelemente 91, die zueinander relativ verstellbar sind, gebildet werden.

Wie aus der Fig. 6 zu entnehmen, ist der Querverbindungsteil 8, insbesondere der Schenkel 12, in einem dem Fußteil 25 gegenüberliegenden Endbereich über ein bolzenförmiges Verbindungselement mit dem Tragelement 9 verschwenkbeweglich verbunden. Des weiteren ist der Querverbindungsteil 8, insbesondere der Schenkel 12, in einem dem Rückenteil 24 gegenüberliegenden Endbereich mit dem verschwenkbeweglich gelagerten Fußteil 25 und der Stellvorrichtung 92 für den Rückenteil 25 über ein bolzenförmiges Verbindungselement verschwenkbeweglich verbunden. Dazwischenliegend verbindet ein bolzenförmiges Verbindungselement den Querverbindungsteil 8, insbesondere den Schenkel 12, mit dem Tragelement 10 und der verschwenkbeweglich gehalterten Stellvorrichtung 92 für den Fußteil 25.

Durch eine Verkürzung oder Verlängerung wenigstens eines der Stellelemente 91 der Stellvorrichtung 92 ist eine voneinander getrennte Variierung der Neigung des Rückenteiles 24 und des Fußteiles 25 gegenüber dem Querverbindungsteil 8 bzw. einem zwischen den gegenüberliegenden Schenkeln 12 angeordneten, nicht weiters dargestellten Sitz- und/oder Liegeteil möglich. Es sei darauf hingewiesen, daß bevorzugt nur eines der Stellelemente 91 für die Längenvariierung ausziehbar bzw. verschiebbar ist.

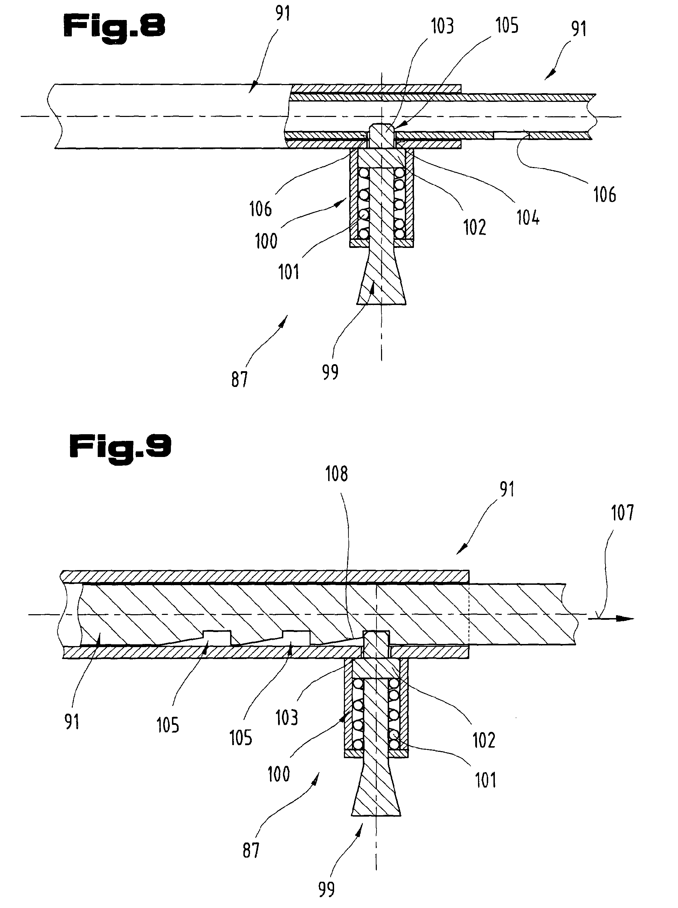

Wird eine maximale Verkürzung der Länge zumindest eines der Stellelemente 91 für den Rückenteil 24 vorgenommen, ergibt sich, wie nicht weiters dargestellt, ein Winkel zwischen dem Rückenteil 24 und dem Querverbindungsteil 8 bzw. zwischen dem Rückenteil 24 und dem Sitz- und/oder Liegeteil, der im wesentlichen einem gestreckten Winkel entspricht. Bei maximaler Verlängerung zumindest eines der Stellelemente 91 wird im wesentlichen zwischen dem Rückenteil 24 und dem einen Sitz- und/oder Liegeteil aufnehmenden Querverbindungsteil 8 ein stumpfer Winkel eingeschlossen. Die hochgestellte Lage des Rückenteiles 24 ist in der Fig. 5 in strichpunktierten Linien angedeutet. Da zumindest einem der Stellelemente 91 in Längserstreckung mehrere voneinander distanzierte Bohrungen 106 zugeordnet sind, ist eine beliebige Variierung der Neigung bzw. des Winkels des Rückenteiles 24 zu dem Sitz- und/oder Liegeteil bzw. Querverbindungsteil 8 möglich, wobei eine eingestellte Position über die in den Fig. 8 und 9 beschriebenen Arretiervorrichtungen 87 feststellbar ist.

Das gleiche Prinzip ist auch auf die Stellvorrichtung 92 für den Fußteil 25 verwendbar. Bei einer Verlängerung zumindest eines der beiden Stellelemente 91 wird eine Anhebung des Fußteiles 25 in Richtung des Querverbindungsteiles 8, wie dies in strichpunktierten Linien dargestellt ist, ermöglicht. Bei einer Verkürzung der Länge eines der Stellelemente 91 ist eine Anhebung des Fußteiles 25 in einer der dieser Verschwenkbewegung gegensinnigen Richtung möglich. Natürlich ist auch der Fußteil 25 durch die Arretiervorrichtung 87 in unterschiedlichsten Neigungen fixierbar. Auf diese Weise kann bei einer maximalen Verkürzung der bedarfsweise längenveränderbaren Stellvorrichtung 92 des Rückenteiles 24 und bei einer maximalen Verlängerung der bedarfsweise längenveränderbaren Stellvorrichtung 92 des Fußteiles 25 ein Liegeteil für das Kleinkind eingestellt bzw. geschaffen werden. Bei einer maximalen Verlängerung der Stellvorrichtung 92 des Rückenteiles 24 und bei einer maximalen Verkürzung der Stellvorrichtung 92 des Fußteiles 25 kann ein Sitzteil für eine Person, die nicht weiters dargestellt ist, eingestellt bzw. geschaffen werden. Über die Verstelleinrichtung 26 ist daher auch eine einfache Anpassung auf unterschiedliche Körpergrößen von einer Person, insbesondere einem Kleinkind, möglich. Eine andere, nicht weiters dargestellte Ausführungsform besteht darin, daß der Sitz- und/oder Liegeteil längenveränderbar ausgebildet ist.

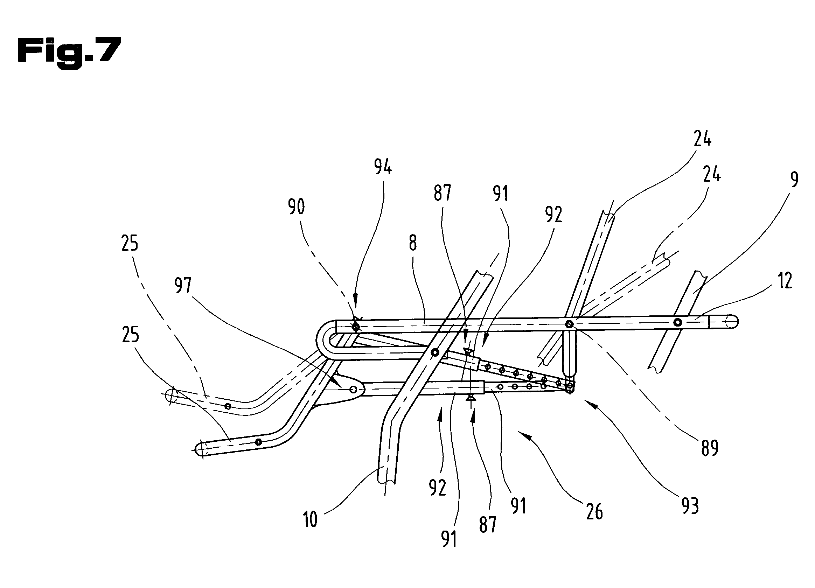

In der Fig. 7 ist eine andere Ausführungsvariante einer Verstelleinrichtung 26 gezeigt. Wie aus dieser Figur ersichtlich, verbindet die Stellvorrichtung 92 den Rückenteil 24 und den Fußteil 25 miteinander, wodurch eine Relativverstellung des Fußteiles zum Rückenteil 24 gleichzeitig vonstatten geht. Die weitere Stellvorrichtung 92 erstreckt sich von dem Anlenkpunkt 93 in Richtung des Anlenkpunktes 94, in welchen die Stellelemente 91 verschwenkbeweglich gelagert sind. Dadurch ergibt sich der Vorteil, daß unter einer vorbestimmbaren Neigung des Rückenteiles 24 und des Fußteiles 25 und des Querverbindungsteiles 8 bzw. zueinander eine synchrone Verstellung bzw. Verschwenkung durchgeführt werden kann. Durch die Anordnung der Arretiervorrichtung 87 an der sich zwischen dem Fußteil 25 und dem Rükkenteil 24 erstreckenden Verstellvorrichtung 92 ist eine beliebig variierbare Neigung bzw. ein Winkel zwischen dem Rückenteil 24 und dem Fußteil 25 einstellbar und fixierbar, bei der die weitere sich zwischen dem Rückenteil 24 und dem Anlenkpunkt 94 erstreckende Stellvorrichtung 92 in deren eingestellten Lage bzw. Position des Rückenteiles 24 zu dem Fußteil 25 gegenüber dem Sitz- und/oder Liegeteil positioniert haltert bzw. abstützt bzw. über die Arretiervorrichtung 87 arretiert. Natürlich ist jede beliebige Variierung des Rückenteiles 24 zu dem Fußteil 25 in bezug auf einen zwischen diesen eingeschlossenen Winkel variierbar und fixierbar.

In den Fig. 8 und 9 ist die der längenveränderbaren Stellvorrichtung 92 zugeordnete Arretiervorrichtung 87 dargestellt, die sich im wesentlichen aus einem federbelasteten, zylindrischen Einrastelement 99 und einem dieses zumindest bereichsweise überdeckenden bzw. umhüllenden zylindrischen Gehäuseteil 100 zusammensetzt. Eine dem Einrastelement 99 zugeordnete Feder 101 stützt sich an einer Wandung des Gehäuseteiles 100 und einem dem Stellelement 91 zugewandten zylindrischen Bund 102 ab. Ein vom Bund 102 in Richtung der Stellelemente 91 vorragender Fortsatz 103 durchragt eine vom äußeren Stellelement 91 ausgebildete Ausnehmung 104 und fixiert das weitere innenliegende, zumindest bereichsweise geführte Stellelement 91 über eine am innenliegenden Stellelement 91 angeordneten Ausnehmung 105, insbesondere über eine Bohrung 106. Auf diese Weise ist zwischen den beiden Stellelementen 91 der Stellvorrichtung 92 eine formschlüssige Verbindung zwischen diesem erreicht, wodurch eine eingestellte Position bzw. Neigung des Rückenteiles 24 und des Fußteiles 25 fixierbar ist. Bevorzugt ist der Gehäuseteil 100 mit einem der Stellelemente 91 verbunden, insbesondere verschweißt, verklebt etc. Das innenliegende längsverschiebbare Stellelement 91 weist mehrere voneinander distanzierte Ausnehmungen 105, insbesondere Bohrungen 106, für unterschiedliche Verstellwege auf. Die Stellelemente 91 werden bevorzugt durch Formrohre mit kreisrundem Querschnitt gebildet. Natürlich besteht auch die Möglichkeit, daß zumindest eines der Stellelemente 91 einen mehreckigen Vollquerschnitt aufweist, dem ebenfalls ein mehreckig ausgebildetes Stellelement zugeordnet ist. Zweckmäßig ist das Einrastelement 99 an einem den Stellelementen 91 gegenüberliegenden Endbereich mit einem konischen Betätigungskopf ausgestattet.

In der Fig. 9 ist eine andere Ausführungsvariante der Arretiervorrichtung 87 gezeigt. Dabei weist das innenliegende Stellelement 91 in Verstellrichtung - gemäß Pfeil 107 - mehrere bevorzugt unmittelbar hintereinander angeordnete Ausnehmungen 105 auf, die in Verstellrichtung - gemäß Pfeil 107 - zumindest über einen Teil seiner Länge verjüngende Stützflächen 108 ausbilden, an denen parallel zu der diesen zugewandten Stirnfläche des Fortsatzes 103 des Einrastelementes 99 verlaufende und vertieft angeordnete Stützflächen anschließen. Durch den gegenüber den geneigt verlaufenden Stützflächen 87 vertieft angeordneten Nutboden ist eine sichere Arretierung des Einrastelementes 99 möglich, da ausschließlich durch das Aufbringen einer von der Feder 101 ausgeübten Federkraft entgegenwirkenden Betätigungskraft der Fortsatz 103 aus seiner arretierten Stellung ausgehoben werden kann, um eine Verstellung der Länge der Stellelemente 91 bzw. der Stellvorrichtung 92 durchführen zu können. Durch eine bevorzugt senkrecht zur Verstellrichtung - gemäß Pfeil 107 - ausgerichteten Anschlagfläche ist ausschließlich in Verstellrichtung - gemäß Pfeil 107 - eine Längenveränderung möglich. In einer der Verstellrichtung entgegengesetzten Richtung wird das Einrastelement 99, insbesondere der Fortsatz 103, von der Anschlagfläche begrenzt. Wird das innenliegende Stützelement 91 in Verstellrichtung - gemäß Pfeil 107 - bewegt, wird infolge der geneigten Stützflächen 108 das Einrastelement 99 in Gegenrichtung der Federkraft angehoben, so lange, bis der Fortsatz 103 in die nachfolgende Ausnehmung 105 einrastet. In einer der Verstellrichtung - gemäß Pfeil 107 - entgegengerichteten Arretierrichtung wird die eingestellte Position bzw. Neigung des Rückenteiles 24 und/oder Fußteiles 25 fixiert gehalten.

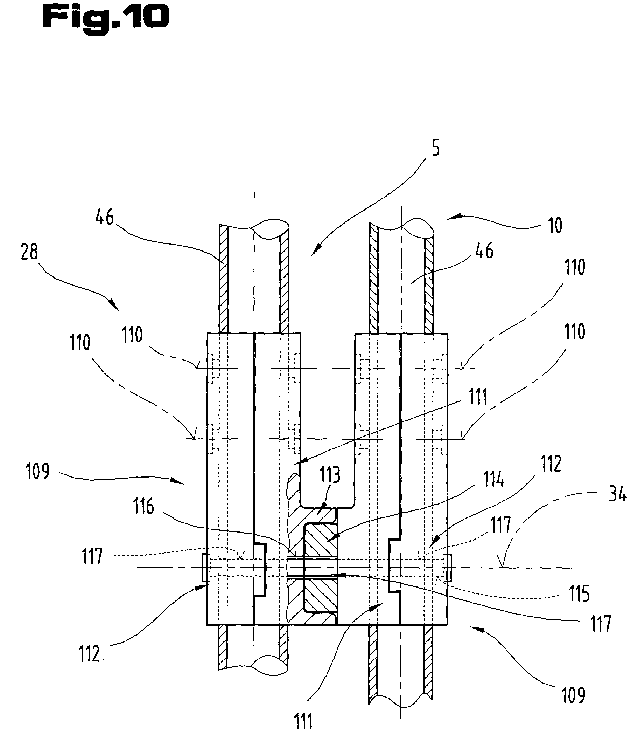

In der Fig. 10 ist die Gelenkanordnung 28 in Ansicht und teilweise geschnitten und in stark vereinfachter, schematischer Darstellung gezeigt. Die den Schwenkschieber 5 und die Tragelemente 9 oder 10 verschwenkbeweglich miteinander verbindende Gelenkanordnung 28 weist zumindest zwei im Längsverlauf derselben, insbesondere jeweils in den einander zugewandten Endbereichen des Längsschiebers 5 und der Tragelemente 10 last- und/oder momentenübertragende Übertragungsorgane 109 auf, die über zumindest ein bedarfsweise lösbares Befestigungselement 110 mit dem Lenkschieber 5 und dem Tragelement 10 verbunden ist. Das das Tragelement 10 bzw, den Lenkschieber 5 zumindest über einen Teilbereich deren Länge allseitig umschließende halbschalenförmige Übertragungsorgan 109 ist mehrteilig aufgebaut und umfaßt zumindest ein Verschwenkbewegungen aufnehmendes Klemmteil 111 bzw. Übertragungselement und zumindest ein diesem zugeordnetes Klemmteil 112. Eines der einander zugewandten Klemmteile 111 bzw. Übertragungselemente des Schwenkschiebers 5 und des Tragelementes 10 ist mit zumindest einem kreisringförmigen, den Außenumfang überragenden Führungsteil 113 ausgestattet, in dem ein diesem zugeordneter kreiszylinderförmiger Führungsteil 114 des anderen Klemmteiles 111 bzw. Übertragungselementes vorragt bzw. spielfrei eingreift. Der sich in Eingriff mit dem Führungsteil 113 befindliche Führungsteil 114 wird im wesentlichen spielfrei in radialer Richtung geführt. In axialer Richtung, daher in Richtung der Schwenkachse 34, werden die Übertragungsorgane 109 des Tragelementes 10 und des Schwenkschiebers 5 miteinander über bedarfsweise lösbare Verbindungselemente, wie beispielsweise Schrauben-, Bolzenanordnung etc. spielfrei verbunden.

Dadurch wird eine in ihrem konstruktivem Aufbau robuste, verwendungssteife last- und/oder momentenübertragende Gelenkanordnung 28 im Zusammenwirken mit den Übertragungsorganen 109 und Tragelementen 10 und dem Schwenkschieber 5 gebildet.

Des weiteren weisen die Klemmteile 112 und die Klemmteile 111 bzw. Übertragungselemente im Bereich des Führungsteiles 113 und im Bereich des Führungsteiles 114 eine miteinander korrespondierende Zentrier- bzw. Positioniervorrichtung, insbesondere einen Längspositionierfortsatz und eine mit diesem korrespondierende Längspositioniernut, auf, welche die Bauteile bzw. Bauelemente zueinander positioniert. Dadurch werden die Klemmteile 111 bzw. Übertragungselemente und Klemmteile 112 zueinander formschlüssig und kraftschlüssig gehaltert. Die Übertragungsorgane 109 und die Tragelemente 10 werden mit über ein bolzenförmiges Spannelement 115, wie in strichlierten Linien dargestellt, in Richtung der Schwenkachse 34 miteinander spielfrei verbunden. Dabei werden eine Bohrung 116 der Übertragungsorgane 109, insbesondere der Klemmteile 111, und eine Bohrung 117 der Tragelemente 10 und Schwenkschieber 5 von dem Spannelement 115 durchragt.

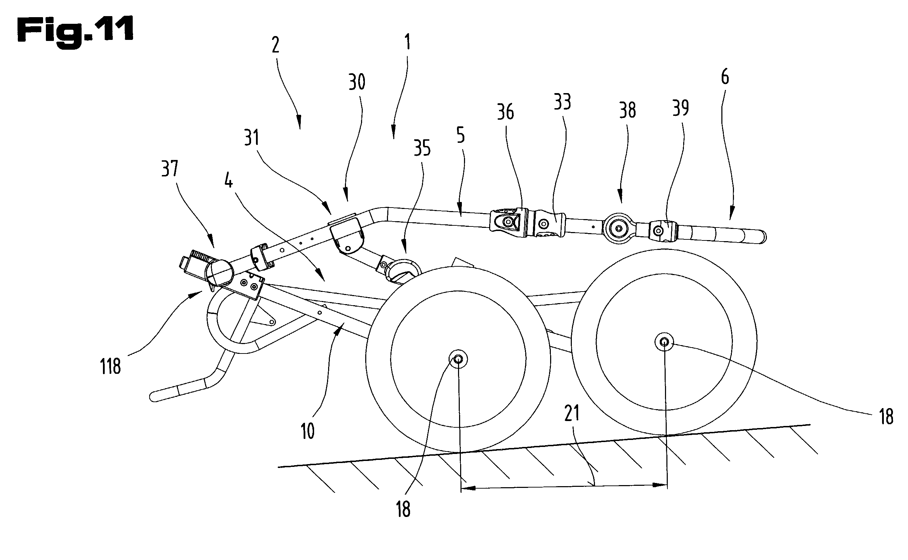

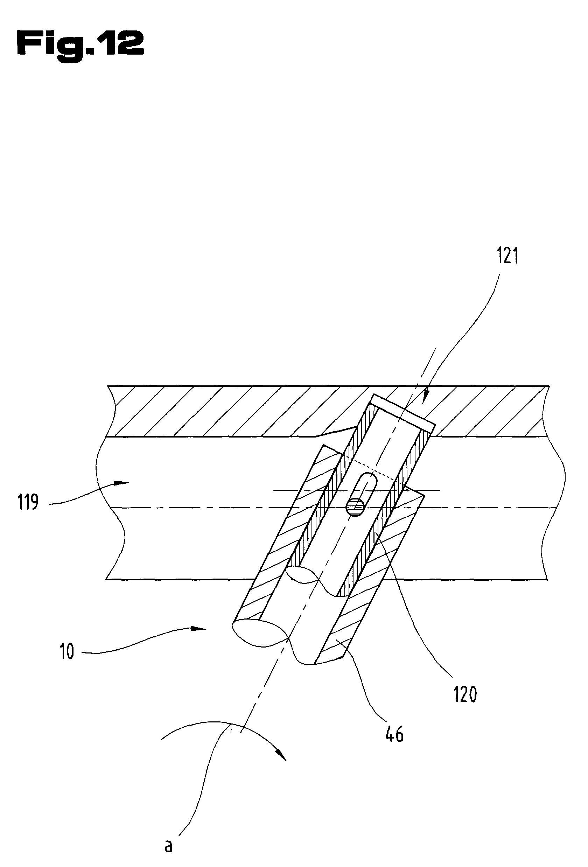

Wie in den gemeinsam beschriebenen Fig. 11 und 12 dargestellt, ist das Transportmittel 1, insbesondere der Kinderwagen 2, in seiner zusammengeklappten Stellung in Seitenansicht und in stark vereinfachter, schematischer Darstellung gezeigt. Wie aus dieser Figur ersichtlich, verkürzt sich ein zwischen den zueinander beabstandeten Fahrachsen 18 bemessener Längsabstand 21, wodurch der Kinderwagen 2 in seiner Gesamtbaugröße wesentlich verkleinerbar ist und wodurch ein wesentlich geringerer Platzbedarf für den Transport erforderlich ist. Die ein Drehkreuzteil 118 aufweisende Verriegelungsvorrichtung 37 ist mit einem, wie in der Fig. 12 dargestellt, Transportsicherungselement ausgestattet.

Die den Schwenkschieber 5 und die Tragelemente 10 zusammenklappbar miteinander verbindenden und diese zumindest bereichsweise umfassenden Verriegelungsvorrichtungen 37 weisen in einer zu ihrer Längserstreckung senkrechten Ebene zwei parallel zueinander und voneinander distanziert verlaufende, etwa U-förmige Aussparungen 119 auf, wobei in eine der beiden Aussparungen 119 die verschwenkbaren Tragelemente 10 vorragen. In einem dem Tragelement 10 gegenüberliegenden, eine Wandstärke aufweisende Wandteil ist eine mit einem federbelasteten rohrförmigen Bolzen 120 korrespondierende Vertiefung 121, insbesondere eine Sacklochbohrung, angeordnet. Der Bolzen 120 überragt in seiner Ausgangsstellung eine Stimkante der Tragelemente 10. Zweckmäßig ist die dem Tragelement 10 zugewandte Längsseitenfläche zumindest über einen Teilbereich, bevorzugt in einem der Vertiefung 121 benachbarten Übergangsbereich mit einer in Zusammenklapprichtung - gemäß Pfeil a - geneigt aufweitenden Stützfläche versehen, über welche der federbelastete Bolzen während seiner Verschwenkung des Tragelementes 10 in eine zusammengeklappte Stellung überstreift, bis dieser in eine arretierte Stellung einrastet, in der die Tragelemente 10 bzw. der Unterrahmen 4 zu dem Schwenkschieber 5 fixiert gehaltert wird, sodaß ein einfacher Transport ermöglicht wird.

Durch das Betätigen der hülsenförmigen Betätigungselemente 36 ist eine Federkraft einer den Bolzen 120 vorspannenden Feder überwindbar, wodurch die federbelasteten Bolzen 120 von einer Arretierstellung in eine Freigabestellung verbracht werden. Dazu sind in Längserstrekkung der rohrförmigen Bolzen 120 langlochförmige Ausnehmungen ausgebildet, deren Länge von dem Verstellweg bzw. von dem Längsabstand des die Stirnkante der Tragelemente 10, insbesondere der Formrohre 46, überragenden Bolzen 120 abhängig ist. Die Ausnehmungen sind von Bolzen durchsetzt, die eine Schwenklagerung für das Tragelement 10 ausbilden. Die Bolzen 120 sind in den Tragelementen 10, insbesondere den Formrohren 46, längsgeführt.

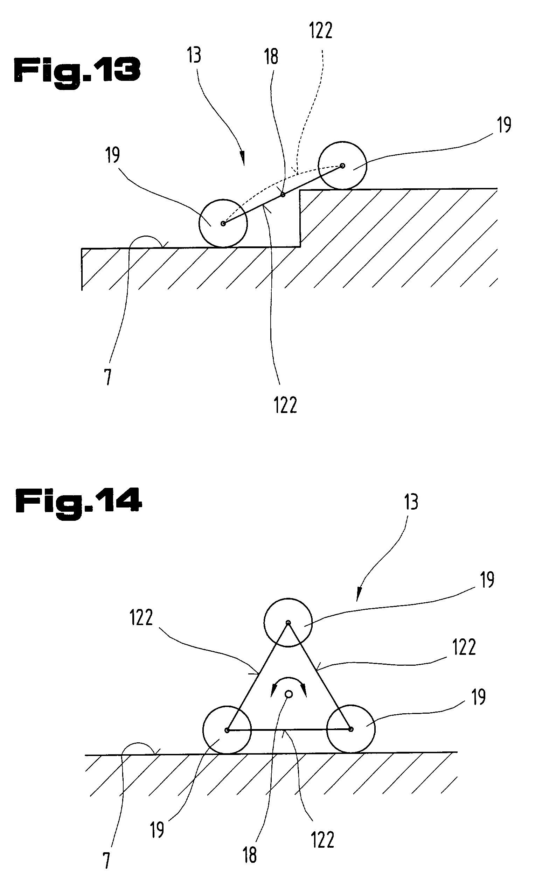

In den gemeinsam beschriebenen Fig. 13 und 14 ist das Fahrwerk 13 in Seitenansicht und in stark vereinfachter, schematischer Darstellung gezeigt. Das mehrere Räder 19 aufweisende Fahrwerk 13 ist um eine Fahrachse 18 verschwenkbeweglich bzw. drehbar gelagert, wodurch unebene Fahrbahnoberflächen 7, insbesondere Gehsteige etc., problemlos überwunden werden können. Eine Ausführungsvariante besteht darin, daß zumindest zwei in einem Abstand voneinander distanzierte Räder von einem gemeinsamen Achsschenkel 122, der mit der Fahrachse 18 verschwenkbeweglich verbunden ist, drehbar gelagert werden. Der Achsschenkel 122 kann auch gekrümmt, insbesondere konvex zu der Fahrbahnoberfläche 7 verlaufen, wie in strichlierten Linien dargestellt.

Eine in der Fig. 14 dargestellte andere Ausführungsvariante zeigt, daß das Fahrwerk 13 durch mehrere in den Eckpunkten eines bevorzugt gleichseitigen Dreieckes angeordnete Räder 19 gebildet ist, das in seinem Schwerpunkt die Fahrachse 18 aufweist, um den das Fahrwerk 13 verschwenkbeweglich gelagert ist. Derartige ein- oder mehrschichtig aufgebaute Räder 19 können natürlich aus allen aus dem Stand der Technik bekannten Materialien bzw. Aufbauten gebildet werden. So können diese beispielsweise eine innenliegende, eine hohe Festigkeit aufweisende Tragschale bzw. Schichte oder Segmente aufweisen, welche von einer gegebenenfalls weicheren Laufschichte umgeben ist, welche über aus dem Stand der Technik bekannte Verfahren, wie Coextrusion etc. herstellbar ist. Die Räder 19 können durch thermoplastische Elastomere, insbesondere vergossene lineare Polyurethane, z.B. Durethan, Perlon etc. gebildet werden.

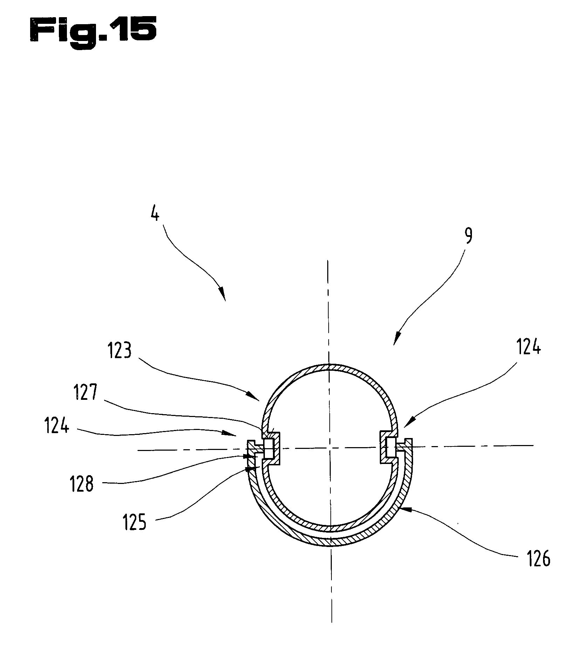

In der Fig. 15 ist ein möglicher Querschnitt des Tragelementes 9 oder 10 des Unterrahmens 4 in Draufsicht, geschnitten und in stark vereinfachter, schematischer Darstellung gezeigt. Natürlich kann das Tragelement 9 oder 10 jeden beliebigen aus dem Stand der Technik bekannten Querschnitt aufweisen. Die Längenverstelleinrichtung 123 umfaßt eine oder mehrere Führungsvorrichtungen 124 und einen das Tragelement 9 oder 10 zumindest bereichsweise umschließenden, mit einer Rollenanordnung 125 ausgestatteten Führungsteil 126, wobei der Führungsteil 126 mit der Querschnittsform des Tragelementes 9; 10 korrespondiert. Die Führungsvorrichtung 124 wird durch eine sich in Längsrichtung des Tragelementes 9; 10 erstrekkende, eine Längsführungsbahn 127 und/oder Seitenführungsbahn oder Kulisse ausbildende nutförmige Aussparung 128 gebildet. Zweckmäßig werden in Längsrichtung der nutförmigen Aussparung 128 mehrere voneinander beabstandete, von der Aussparung 128 in radialer und axialer Richtung im wesentlichen spielfrei geführte Rollen angebracht. Natürlich besteht auch die Möglichkeit, anstatt der Rollenanordnung 125 Gleitsteine bzw. Kulissensteine etc. für eine gleitende Verschiebung des Führungsteiles 126 relativ verstellbar zu dem Tragelement 9; 10 auszubilden. Selbstverständlich können alle anderen aus dem Stand der Technik bekannten Führungsvorrichtungen 124 und Führungsteile 126, die eine in Längsrichtung und/oder in einer dazu querenden Richtung des Tragelementes 9; 10 im wesentlichen spielfreie Längsverschiebung ermöglicht, verwendet werden.

Selbstverständlich besteht auch die Möglichkeit, daß die Führungsvorrichtungen 124 und der Führungsteil 126 innerhalb und/oder außerhalb des Tragelementes 9; 10 angeordnet sind. Natürlich besteht auch die Möglichkeit, Druckgußteile bzw. Profile und/oder Stranggußteile bzw. Profile als Führungsvorrichtung 124 auszubilden, die mit der sich in Längsrichtung des Tragelementes 9; 10 erstreckenden, die Längsführungsbahn 106 oder Kulisse ausbildenden nutförmigen Aussparung 128 versehen ist.

Die Fixierung einer eingestellten Position in Längsrichtung der Tragelemente 9; 10 ist beispielsweise mit einem in einer zur Längsrichtung querenden Richtung angeordneten Fixierelement, insbesondere federbelastete Bolzen-, Schraubenanordnungen etc., möglich.

Abschließend sei darauf hingewiesen, daß der Tragrahmen 3 mit dem Unterrahmen 4, dem Schwenkschieber 5, dem Lenkrahmen 6, um nur einige Elemente desselben zu nennen, mit Formrohren aus Stahl gebildet ist. Für die Höhenverstelleinrichtung 32, insbesondere für die last- und/oder momentenübertragende Rastvorrichtung 38, und der last- und/oder momentenübertragenden Gelenkanordnung 28 werden bevorzugt Aluminiumdruckgußteile und/oder Aluminiumstranggußteile verwendet. Natürlich können zur Erhöhung der Festigkeit die Aluminiumdruckgußteile und/oder Aluminiumstranggußteile auch mit Legierungselementen angereichert werden. Die Rastvorrichtung 38 und/oder die Gelenkanordnung 28 und/oder Teile des Tragrahmens 3 können aus Grauguß GG und/oder globularem Grauguß GGG und/oder Stahlwerkstoffen gebildet werden. Natürlich können für die zuvor genannten Bauteile bzw. Bauelemente aber auch alle anderen aus dem Stand der Technik bekannten, eine geringfügig niedrigere oder gleiche oder höhere Festigkeit- und/oder Zähigkeitskennwerte aufweisende Materialien, wie beispielsweise Kunststoffe, glasfaserverstärkte Kunststoffe etc., oder Verbundwerkstoffe verwendet werden.

Abschließend sei noch darauf hingewiesen, daß es auch möglich ist, im Bereich des Tragrahmens 3, insbesondere am Schwenkschieber 5, akustische und/oder optische, das Verhalten des Kleinkindes wahrnehmende Organe, wie dies insbesondere über Babyphon, Kameras etc. möglich ist, anzuordnen. Dazu können natürlich alle aus dem Stand der Technik bekannten Bauelemente verwendet werden. Möglich ist natürlich auch die Anbringung von Halterungen am Tragrahmen 3, insbesondere am Unterrahmen 4, zur Aufnahme von Behältern, beispielsweise Flaschen etc., oder Handys etc.

Eine andere, nicht dargestellte Ausführungsvariante besteht darin, daß die Gelenkanordnung 28 und/oder die Verstelleinrichtung 26 für den Rückenteil 24 und Fußteil 25 durch die Höhenverstelleinrichtung 32, insbesondere der Rastvorrichtung 38 gebildet ist. Natürlich kann die Rastvorrichtung 38 auch nur zwischen zwei aufeinander ausgerichtete, miteinander verschwenkbeweglich zu verbindende Formrohre 46 eingesetzt werden.

Natürlich kann die Höhenverstelleinrichtung 32, insbesondere die Rastvorrichtung 38, beispielsweise auch zwischen einem Rückenteil und Fußteil einer Wippe angeordnet werden.

Der Ordnung halber sei abschließend darauf hingewiesen, daß zum besseren Verständnis des Transportmittels 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2; 3, 4; 5, 6, 7, 8, 9; 10; 11, 12; 13, 14; 15 gezeigten Ausführungen und Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Transportmittel
- 2: Kinderwagen
- 3: Tragrahmen
- 4: Unterrahmen
- 5: Schwenkschieber

- 6: Lenkrahmen
- 7: Fahrbahnoberfläche
- 8: Querverbindungsteil
- 9: Tragelement
- 10: Tragelement

- 11: Breite
- 12: Schenkel
- 13: Fahrwerk
- 14: Endbereich
- 15: Verbindungsschenkel

- 16: Schwenkarm
- 17: Achsfedervorrichtung
- 18: Fahrachse
- 19: Rad
- 20: Federanordnung

- 21: Längsabstand
- 22: Längsabstand
- 23: Ablagefach
- 24: Rückenteil
- 25: Fußteil

- 26: Verstelleinrichtung
- 27: Endbereich
- 28: Gelenkanordnung
- 29: Endbereich
- 30: Halte- und Arretiervorrichtung

- 31: Abdeckelement
- 32: Höhenverstelleinrichtung
- 33: Betätigungselement
- 34: Schwenkachse
- 35: Arretiervorrichtung

- 36: Betätigungselement
- 37: Verriegelungsvorrichtung
- 38: Rastvorrichtung
- 39: Betätigungselement
- 40: Griffteil

- 41: Basis
- 42: Schenkel
- 43: Schwenkachse
- 44: Rastelement
- 45: Fortsatz

- 46: Formrohr
- 47: Verzahnungselement
- 48: Zahnflanke
- 49: Rastausnehmung
- 50: Aufnahmenut

- 51: Öffnungswinkel
- 52: Teilungswinkel
- 53: Radius
- 54: Nutboden
- 55: Kopfflanke

- 56: Radius
- 57: Längsmittelachse
- 58: Führungsbohrung
- 59: Führungsbolzen
- 60: Positionier- und Fixierelement

- 61: Positionier- und Arretiervorrichtung
- 62: Führungsteil
- 63: Führungselement
- 64: Führungsfläche
- 65: Führungsfläche

- 66: Fortsatz
- 67: Führungsstück
- 68: Positionier- und Arretierelement
- 69: Ausnehmung
- 70: Länge

- 71: Bolzen
- 72: Eingriffhöhe
- 73: Arretierfortsatz
- 74: Pfeil
- 75: Feder

- 76: Verschlußelement
- 77: Bohrung
- 78: Tiefe
- 79: Betätigungselement
- 80: Ausnehmung

- 81: Wickelelement
- 82: Zugmittel
- 83: Seil
- 84: Arretierelement
- 85: Betätigungsfortsatz

- 86: Hebelelement
- 87: Arretiervorrichtung
- 88: Abstand
- 89: Schwenkachse
- 90: Schwenkachse

- 91: Stellelement
- 92: Stellvorrichtung
- 93: Anlenkpunkt
- 94: Anlenkpunkt
- 95: Verbindungselement

- 96: Anlenkpunkt
- 97: Befestigungswange
- 98: Schwenkachse
- 99: Einrastelement
- 100: Gehäuseteil

- 101: Feder
- 102: Bund
- 103: Fortsatz
- 104: Ausnehmung
- 105: Ausnehmung

- 106: Bohrung
- 107: Pfeil
- 108: Stützfläche
- 109: Übertragungsorgan
- 110: Befestigungselement

- 111: Klemmteil
- 112: Klemmteil
- 113: Führungsteil
- 114: Führungsteil
- 115: Spannelement

- 116: Bohrung
- 117: Bohrung
- 118: Drehkreuzteil
- 119: Aussparung
- 120: Bolzen

- 121: Vertiefung
- 122: Achsschenkel
- 123: Längenverstelleinrichtung
- 124: Führungsvorrichtung
- 125: Rollenanordnung

- 126: Führungsteil
- 127: Längsführungsbahn
- 128: Aussparung

## Patentansprüche

1. Höhenverstelleinrichtung zum stufenweisen Verstellen bzw. Verschwenken eines Lenkrahmens eines Transportmittels, insbesondere Kinderwagen, um eine parallel zu einer Fahrachse des Transportmittels verlaufenden Schwenkachse gegenüber einem rahmenförmigen Schwenkschieber, die durch zumindest eine zwischen dem Lenkrahmen und dem rahmenförmigen Schwenkschieber angeordnete Rastvorrichtung gebildet ist, welche zumindest ein mit dem Schwenkschieber oder Lenkrahmen verbundenes Rastelement und zumindest eine wenigstens ein Positionier- und Arretierelement aufweisende Positionier- und Arretiervorrichtung aufweist, **dadurch gekennzeichnet, daß** ein gabelkopfförmiger Führungsteil (62) der Positionier- und Arretiervorrichtung (61) eine Führungsbohrung (58) für eine Schwenkachse (43) aufweist, die das etwa scheibenförmige Rastelement (44) lagert, und daß der gabelkopfförmige Führungsteil (62) das Positionier- und Arretierelement (68) mit zumindest einem in eine Rastausnehmung (49) des Rastelementes (44) eingreifenden Arretierfortsatz (73) verstellbar lagert, welches in Arretierrichtung - gemäß Pfeil (74) - des Arretierfortsatzes (73) elastisch vorgespannt ist.

2. Höhenverstelleinrichtung nach Anspruch 1, **dadurch gekennzeichnet, daß** der Führungsteil (62) zwei gegenüberliegende, voneinander distanzierte scheibenförmige Führungselemente (63) aufweist, zwischen welchen das scheibenförmige Rastelement (44) auf der Schwenkachse (43) gelagert ist.

3. Höhenverstelleinrichtung nach Anspruch 1 oder 2, **dadurch gekennzeichnet, daß** das scheibenförmige Rastelement (44) auf der Schwenkachse (43) sowohl in radialer, als auch in Längsrichtung der Schwenkachse (43) spielfrei gelagert ist.

4. Höhenverstelleinrichtung nach einem oder mehreren der vorhergehenden Ansprüche, **dadurch gekennzeichnet, daß** das Rastelement (44) konzentrisch zwischen den scheibenförmigen Führungselementen (63) angeordnet ist.

5. Höhenverstelleinrichtung nach einem oder mehreren der vorhergehenden Ansprüche, **dadurch gekennzeichnet, daß** die scheibenförmigen Führungselemente (63) des Führungsteiles (62) das Rastelement (44) zumindest bereichsweise überdecken.

6. Höhenverstelleinrichtung nach einem oder mehreren der vorhergehenden Ansprüche, **dadurch gekennzeichnet, daß** der Führungsteil (62) und das Rastelement (44) mit einem Fortsatz (45; 66) ausgestattet ist, wobei der Fortsatz (45; 66) und der Lenkrahmen (6) bzw. der Schwenkschieber (5) einander zumindest über einen Teil ihrer Länge überlappen bzw. überdecken.

7. Höhenverstelleinrichtung nach einem oder mehreren der vorhergehenden Ansprüche, **dadurch gekennzeichnet, daß** der Fortsatz (45; 66) und der Lenkrahmen (6) bzw. der Schwenkschieber (5) im Überlappungs- bzw. Überdeckungsbereich miteinander kraft- und/oder formschlüssig verbunden sind.

8. Höhenverstelleinrichtung nach einem oder mehreren der vorhergehenden Ansprüche, **dadurch gekennzeichnet, daß** der Fortsatz (45; 66) und/oder der Lenkrahmen (6) bzw. Schwenkschieber (5) rohrförmig mit z.B. kreisrundem oder mehreckigem Querschnitt ausgebildet ist/sind.

9. Höhenverstelleinrichtung nach einem oder mehreren der vorhergehenden Ansprüche, **dadurch gekennzeichnet, daß** der hohlzylinderförmige Fortsatz (66) des gabelkopfförmigen Führungsteils (62) mit einer radial zur Längsmittelachse (57) der Schwenkachse (43) ausgerichteten, insbesondere radial zur Längsmittelachse (57) der Schwenkachse (43) ausgerichteten Führungsbohrung (58) für das Positionier- und/ oder Arretierelement (68) ausgebildet ist und zumindest eine den Mantel des hohlzylinderförmigen Fortsatzes (66) durchragende Ausnehmung (80) in Form eines mit seiner Längsmittelachse (57) sich parallel zur Längsmittelachse (57) der Führungsbohrung (58) erstreckenden Langloches angeordnet ist.

10. Höhenverstelleinrichtung nach einem oder mehreren der vorhergehenden Ansprüche, **dadurch gekennzeichnet, daß** der Mantel in einer die Längsmittelachse (57) der Schwenkachse (43) und der Führungsbohrung (58) aufnehmenden Ebene oder in einer dazu parallel verlaufenden Ebene mit zwei spiegelbildlich zueinander angeordneten Ausnehmungen (80) in Form von Langlöchern versehen ist.

11. Höhenverstelleinrichtung nach einem oder mehreren der vorhergehenden Ansprüche, **dadurch gekennzeichnet, daß** die Ausnehmungen (80) im Bereich der Überlappung bzw. Überdeckung zwischen dem Fortsatz (66) und dem Lenkrahmen (6) bzw. den Schwenkschieber (5) angeordnet sind und in diesen übereinstimmende Ausnehmungen (80) angeordnet sind.

12. Höhenverstelleinrichtung nach einem oder mehreren der vorhergehenden Ansprüche, **dadurch gekennzeichnet, daß** in der Führungsbohrung (58) das stabförmige Positionier- und/oder Arretierelement (68) verschiebbar gelagert ist und auf einem dem Rastelement (44) zugewandten Ende mit dem Arretierfortsatz (73) versehen ist und sich mit seinem anderen gegenüberliegenden Ende auf einen in der Führungsbohrung (58) abgestützten elastisch verformbaren Element, z.B. einer Feder (75), abgestützt ist.

13. Höhenverstelleinrichtung nach einem oder mehreren der vorhergehenden Ansprüche, **dadurch gekennzeichnet, daß** ein die Ausnehmung durchragender Bolzen (71) mit dem Positionier- und/oder Arretierelement (68) in der Führungsbohrung (58) und mit einem Betätigungselement (39), welches in Längsrichtung des Fortsatzes (66) bzw. des Lenkrahmens (6) verschiebbar ausgebildet ist, verbunden ist.

14. Höhenverstelleinrichtung nach einem oder mehreren der vorhergehenden Ansprüche, **dadurch gekennzeichnet, daß** das Positionier- und/oder Arretierelement (68) mit einem gegebenenfalls einen geringeren Durchmesser bzw. geringere Außenabmessungen aufweisenden Betätigungsfortsatz (85) versehen ist, der über ein Zugmittel (82) mit einem Betätigungselement (39; 79) bzw. einem Hebelelement (86) zum Zurückziehen des Positionier- bzw. Arretierelementes (68) entgegen der Wirkung des elastisch verformbaren Elementes, insbesondere der Feder (75), verbunden ist.

15. Höhenverstelleinrichtung nach einem oder mehreren der vorhergehenden Ansprüche, **dadurch gekennzeichnet, daß** das Betätigungselement (79) einen Teil des Lenkrahmens (6) als Drehgriff ausgebildet oder ein Drehgriff auf dem Lenkrahmen (6) angeordnet ist.

16. Höhenverstelleinrichtung nach einem oder mehreren der vorhergehenden Ansprüche, **dadurch gekennzeichnet, daß** das vom Betätigungselement (85) abgewandte Ende des Zugmittels (82), insbesondere Seil (83), über ein Führungsorgan in einer Kulissenbahn eines Betätigungselementes (79) in Längsrichtung relativ zu diesem verstellbar geführt ist.

17. Höhenverstelleinrichtung nach einem oder mehreren der vorhergehenden Ansprüche, **dadurch gekennzeichnet, daß** Griffteile (40) des Lenkrahmen (6) und/oder der Betätigungselemente (39; 61) mit einer Korkschichte zumindest bereichsweise umhüllt sind.

18. Höhenverstelleinrichtung nach einem oder mehreren der vorhergehenden Ansprüche, **dadurch gekennzeichnet, daß** der Arretierfortsatz (73) zumindest in einer zur Schwenkachse (43) senkrechten Ebene konisch in Richtung des Rastelementes (44) sich verjüngend ausgebildet ist.

19. Höhenverstelleinrichtung nach einem oder mehreren der vorhergehenden Ansprüche, **dadurch gekennzeichnet, daß** das Rastelement (44) mit über einen Teil des Umfanges verlaufenden Verzahnungselementen (47) versehen ist und einander zugewandten Zahnflanken (48) einer Rastausnehmung (49) sich in Richtung der Schwenkachse (43) verjüngend, z.B. mit einem Öffnungswinkel (51) zwischen 20° und 40°, bevorzugt zwischen 30° und 34°, ausgebildet sind.

20. Höhenverstelleinrichtung nach einem oder mehreren der vorhergehenden Ansprüche, **dadurch gekennzeichnet, daß** der Neigungswinkel, der den Zahnflanken (48) der Rastausnehmung (49) zugewandten Stützflächen des Arretierfortsatzes (73) einen gleichen bzw. geringfügig größeren Öffnungswinkel als die Zahnflanken (48) aufweist.

21. Höhenverstelleinrichtung nach einem oder mehreren der vorhergehenden Ansprüche, **dadurch gekennzeichnet, daß** die Rastausnehmung (49) durch eine, insbesondere sich konisch verjüngende Bohrung, z.B. eine Sacklochbohrung, gebildet ist.

22. Höhenverstelleinrichtung nach einem oder mehreren der vorhergehenden Ansprüche, **dadurch gekennzeichnet, daß** die Rastvorrichtung (38), insbesondere das Rastelement (44) und die Positionier- und Arretiervorrichtung (61) aus einem metallischen Werkstoff, insbesondere einem Aluminiumdruckgußteil, gebildet ist.

23. Höhenverstelleinrichtung nach einem oder mehreren der vorhergehenden Ansprüche, **dadurch gekennzeichnet, daß** die Rastvorrichtung (38), insbesondere das Rastelement (44) und die Positionier- und Arretiervorrichtung (61), aus einem gleiche Festigkeitsund/oder Zähigkeitskennwerte, zumindest wie ein Nichteisenmetall aufweisendes Material, wie Kunststoff, oder ein Verbundwerkstoff aus Metall und/oder Kunststoffen gebildet ist.

24. Gelenkanordnung zwischen einem insbesondere durch Formrohre gebildeten Unterrahmen und einem insbesondere durch Formrohre gebildeten rahmenförmigen Schwenkschieber, bei dem im Längsverlauf der Formrohre des Unterrahmens und des Schwenkschiebers Übertragungsorgane der Gelenkanordnung aufgesetzt sind, **dadurch gekennzeichnet, daß** die Übertragungsorgane (109) mehrere, insbesondere halbschalenförmige Klemmteile (111; 112) aufweisen, die zueinander über Zentrier-bzw. Positioniervorrichtungen, insbesondere Längspositionierfortsätze, in Längsrichtung zueinander ausgerichtet sind und in ihren Längsverlauf mehrere voneinander distanzierte Öffnungen zur Aufnahme von Befestigungselementen (110) zur Verbindung mit dem Unterrahmen (4) und/oder dem Schwenkschieber (5) aufweisen und wenigstens eines der Klemmteile (111) jedes Übertragungsorganes (109) einen über den Außenumfang vorragenden, zum drehbaren Eingriff in den Führungsteil (114) des weiteren Übertragungsorganes (109) ausgebildeten Führungsteil (113) aufweist.

25. Gelenkanordnung nach Anspruch 24, **dadurch gekennzeichnet, daß** einer der Führungsteile (113) einen um eine Schwenkachse (34) konzentrisch umlaufenden ringförmigen Fortsatz und der weitere Führungsteil (114) einen um die Schwenkachse (34) konzentrisch umlaufenden kreiszylinderförmigen Vorsprung aufweist, die miteinander spielfrei und um die Schwenkachse (34) verschwenkbeweglich verbunden sind.

26. Gelenkanordnung nach Anspruch 24 oder 25, **dadurch gekennzeichnet, daß** die von einer Bohrung (116) durchsetzten Führungsteile (113; 114) bzw. Klemmteile (111; 112) und die Tragelemente (10) und der Schwenkschieber (5) über einen bolzenförmigen Spannelement (115) miteinander spielfrei verbunden sind.

27. Verstelleinrichtung für die Verstellung eines Rückenteiles und eines Fußteiles eines Kinderwagens um eine im wesentlichen parallel zu einer Fahrachse des Kinderwagens verlaufende Schwenkachse in unterschiedliche Neigungen, bei den ein Stützarm des Rückenteiles auf einem den Sitz- und/oder Liegeteil für das Kind aufnehmenden Querverbindungsteil schwenkbar gelagert ist und sich über die Schwenkachse hinaus in die von dem Rückenteil entgegengesetzte Richtung erstreckt und in dem über die Schwenkachse vorragenden Endbereich über eine weitere Schwenkachse gelenkig über eine längenveränderbare Stellvorrichtung mit einer weiteren Schwenkachse am Querverbindungsteil verbunden ist, **dadurch gekennzeichnet, daß** der Querverbindungsteil (8) zwischen den beiden Schwenkachsen (89; 90) der längenveränderbaren Stellvorrichtung (92) und dem Rückenteil (24), sowie die Stellvorrichtung (92) und der Querverbindungsteil (8) zwischen einem Anlenkpunkt (93) und der längenveränderbaren Stellvorrichtung (92) des Rückenteiles (24) ein Dreieck bilden und der Fußteil (25) mit einem Ende einer weiteren Stellvorrichtung (92) verbunden ist, der ein anderes Ende mit dem Querverbindungsteil (8) bevorzugt im Bereich der Schwenkachse (98) mit dem Tragelement (10) gelenkig verbindet.

28. Verstelleinrichtung für die Verstellung eines Rückenteiles und eines Fußteiles eines Kinderwagens um eine im wesentlichen parallel zu einer Fahrachse des Kinderwagens verlaufende Schwenkachse in unterschiedliche Neigungen, bei den ein Stützarm des Rückenteiles auf einem den Sitz- und/oder Liegeteil für das Kind aufnehmenden Querverbindungsteil schwenkbar gelagert ist und sich über die Schwenkachse hinaus in die von dem Rückenteil entgegengesetzte Richtung erstreckt und in dem über die Schwenkachse vorragenden Endbereich über eine weitere Schwenkachse gelenkig über eine längenveränderbare Stellvorrichtung mit einer weiteren Schwenkachse am Querverbindungsteil verbunden ist, **dadurch gekennzeichnet, daß** der Querverbindungsteil (8) zwischen den beiden Schwenkachsen (89; 90) der längenveränderbaren Stellvorrichtung (92) und dem Rückenteil (24), sowie die Stellvorrichtung (92) und dem Querverbindungsteil (8) zwischen einem Anlenkpunkt (93) und der Stellvorrichtung (92) der Rückenlehne (24) ein Dreieck bilden und daß die Stellvorrichtung (92) bzw. des Rückenteiles (24) über eine Stellvorrichtung (92) zur Neigungsverstellung mit dem Fußteil (25) gelenkig verbunden ist.

29. Verstelleinrichtung nach einem der Ansprüche 27 oder 28, **dadurch gekennzeichnet, daß** der längenveränderbaren Stellvorrichtung (92) zumindest eine eine eingestellte Lage bzw. Position des Rückenteiles (24) und/oder Fußteiles (25) arretierende bzw. fixierende Arretiervorrichtung (87) zugeordnet ist.

30. Verstelleinrichtung nach einem der Ansprüche 27 bis 29, **dadurch gekennzeichnet, daß** in zumindest einem der ineinander angeordneten längenverstellbaren Stellelemente (91) der Stellvorrichtung (92) wenigstens eine Ausnehmung (105) vorgesehen ist.

31. Verstelleinrichtung nach einem der Ansprüche 27 bis 30, **dadurch gekennzeichnet, daß** die Arretiervorrichtung (87) ein in der Ausgangslage in eine Ausnehmung (105) vorragendes federbelastetes Rastelement (99) ausbildet.

32. Kinderwagen mit mehreren auf mehreren Fahrachsen angeordneten drehbaren Rädern, die Tragelemente abstützen, die über ein Querverbindungsteil zur Aufnahme eines Sitz- und/oder Liegeteiles und gegebenenfalls eines Rückenteiles bzw. eines Fußteiles und die einen Schwenkschieber lagern, der in seinem von den Tragelementen abgewendeten Ende mit einem gegenüber dem Schwenkschieber verschwenkbaren Lenkrahmen versehen ist, **dadurch gekennzeichnet, daß** eine Höhenverstelleinrichtung (32) für den Lenkrahmen (6) gemäß einem der Ansprüche 1 bis 22 und eine Gelenkanordnung (28) zwischen dem Schwenkschieber (5) und dem Unterrahmen (4) nach einem der Ansprüche 24 bis 26, eine Verstelleinrichtung (26) zwischen dem Querverbindungsteil (8) und dem Rückenteil (24) und dem Fußteil (25) nach einem der Ansprüche 27 bis 31 ausgebildet ist und die Räder (19) bzw. Fahrachsen (18) über Schwenkarme (16) und parallel zu den Rad- bzw. Fahrachsen (18) verlaufende Schwenklager relativ zu den Tragelementen (9; 10), insbesondere in deren Längsrichtung verschwenkbar sind und die von den Tragelementen (9; 10) abgewandten Enden der Schwenkarme (16) über eine Federanordnung (20), insbesondere Zugfedern mit den Tragelementen (9, 10) bzw. mit diesen starr verbundenen Verbindungsschenkel (15) federnd verbunden sind.

33. Kinderwagen nach Anspruch 32, **dadurch gekennzeichnet, daß** eine Federanordnung (20) einer Achsfedervorrichtung (17) zwischen dem Verbindungsschenkel (15) bzw. den Tragelementen (9; 10) und den Rädern (19) bzw. Fahrachse (18) oder Schwenkarm (16) durch in Serie geschaltete, unterschiedliche Federkonstanten aufweisende Zugfedern gebildet ist.

34. Verwendung von Aluminiumdruckgußteilen und/oder Aluminiumstranggußteilen für die last- und/oder momentenübertragende Rastvorrichtung (38) und/oder Gelenkanordnung (28) eines Transportmittels (1), insbesondere Kinderwagen (2).

35. Verwendung von vergossenen Polyurethanen für zumindest eine Schichte eines Rades (19) eines Fahrwerkes (13) eines Transportmittels (1), insbesondere Kinderwagen (2).

36. Verwendung von mehreren ineinandergreifenden bzw. ineinander geführten Aluminiumprofilen für eine Längenverstelleinrichtung (123) von Tragelementen (9; 10) eines Tragrahmens (3), insbesondere Unterrahmen (4), eines Transportmittels (1), insbesondere Kinderwagen (2).
